# FASCICULE DE BREVET EUROPEEN

(11) **EP 3 018 526 B1**
(45) Date de publication et mention de la délivrance du brevet: **08.04.2020**
(21) Numéro de dépôt: 15193295.1
(22) Date de dépôt: 05.11.2015
(51) Int. Cl.: G02F 1/313, H04J 14/02

(54) **DISPOSITIF ET PROCÉDÉ DE COMMANDE DE LA TEMPÉRATURE D'UN DISPOSITIF OPTOÉLECTRONIQUE À RÉSONANCES MULTIPLES**
VORRICHTUNG UND VERFAHREN ZUR STEUERUNG DER TEMPERATUR EINER OPTOELEKTRONISCHEN VORRICHTUNG MIT MULTIPLEN SCHALLFREQUENZEN
DEVICE AND METHOD FOR CONTROLLING THE TEMPERATURE OF A MULTI-RESONANT OPTOELECTRONIC DEVICE

(30) Priorité: 07.11.2014 FR 1460766
(43) Date de publication de la demande: 11.05.2016
(73) Titulaire: COMMISSARIAT À L'ÉNERGIE ATOMIQUE ET AUX ÉNERGIES ALTERNATIVES, 75015 Paris (FR)
(72) Inventeur: ZID, Mounir, 38054 GRENOBLE CEDEX 09 (FR); THONNART, Yvain, 38100 GRENOBLE (FR)
(74) Mandataire: Cabinet Beaumont

(56) Documents cités:
- US-A1- 2012 057 866
- US-A1- 2012 105 177
- US-A1- 2012 301 068
- US-A1- 2014 110 572
- ASHOK V KRISHNAMOORTHY ET AL: "Exploiting CMOS Manufacturing to Reduce Tuning Requirements for Resonant Optical Devices", IEEE PHOTONICS JOURNAL, IEEE, USA, vol. 3, no. 3, 1 juin 2011 (2011-06-01), pages 567-579, XP011485100, ISSN: 1943-0655, DOI: 10.1109/JPHOT.2011.2140367
- ZHANG YU ET AL: "Towards Adaptively Tuned Silicon Microring Resonators for Optical Networks-on-Chip Applications", IEEE JOURNAL OF SELECTED TOPICS IN QUANTUM ELECTRONICS, IEEE SERVICE CENTER, PISCATAWAY, NJ, US, vol. 20, no. 4, 1 juillet 2014 (2014-07-01), pages 1-14, XP011542556, ISSN: 1077-260X, DOI: 10.1109/JSTQE.2014.2300184 [extrait le 2014-03-11]
- Kishore Padmaraju ET AL: "Resolving the thermal challenges for silicon microring resonator devices", Nanophotonics, 1 août 2014 (2014-08-01), pages 269-281, XP055202133, DOI: 10.1515/nanoph-2013-0013 Extrait de l'Internet: URL:http://www.degruyter.com/view/j/nanoph .2014.3.issue-4-5/nanoph-2013-0013/nanoph- 2013-0013.xml [extrait le 2015-07-14]
- LINJIE ZHOU ET AL: "Tunable Vernier Microring Optical Filters With p-i-p -Type Microheaters", IEEE PHOTONICS JOURNAL, IEEE, USA, vol. 5, no. 4, 1 août 2013 (2013-08-01), page 6601211, XP011519266, ISSN: 1943-0655, DOI: 10.1109/JPHOT.2013.2271901
- YAN ZHENG ET AL: "Power-efficient calibration and reconfiguration for optical network-on-chip", IEEE/OSA JOURNAL OF OPTICAL COMMUNICATIONS AND NETWORKING, IEEE, USA, vol. 4, no. 12, 1 décembre 2012 (2012-12-01), pages 955-966, XP011483299, ISSN: 1943-0620, DOI: 10.1364/JOCN.4.000955

## Description

### Domaine

La présente demande concerne un dispositif et un procédé de commande de la température d'un dispositif optoélectronique à résonances multiples, en particulier comprenant un microrésonateur optique en anneau. Un tel dispositif est décrit dans l'article Y Zheng : Power Efficient Calibration and Reconfiguration for optical Network-on-Chip Journal of Optical communications and networking vol.4, no 12 Décembre 2012.

### Exposé de l'art antérieur

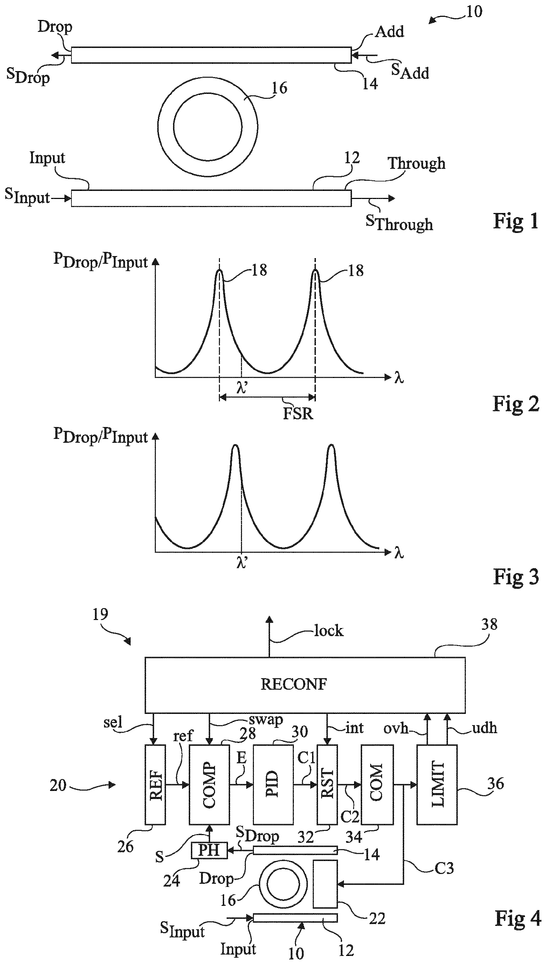

La figure 1 représente un exemple de microrésonateur en anneau 10 comprenant des premier et deuxième guides d'onde 12, 14 entre lesquels est disposé un troisième guide d'onde 16 en forme d'anneau. Un signal lumineux d'entrée S_{Input} est fourni à une extrémité, appelée Input, du premier guide d'onde 12. Des phénomènes de couplage optique entre les guides d'onde 12, 14, 16 peuvent se produire de sorte qu'une partie ou la totalité d'un signal lumineux S_{Input} peut être déviée par l'anneau 16 vers le deuxième guide d'onde 14. Le signal lumineux S_{Input} se divise alors en un signal lumineux S_{Through} émis à l'autre extrémité, appelée Through, du premier guide d'onde 12, et un signal lumineux S_{Drop} émis à une extrémité, appelée Drop, du deuxième guide d'onde 14. Un éventuel signal lumineux S_{Add} reçu à l'autre extrémité, appelée Add, du deuxième guide d'onde 14, peut également être dévié vers les extrémités Through et Drop du microrésonateur en anneau.

La figure 2 représente un exemple de fonction de transfert du microrésonateur 10 pour l'extrémité Drop et correspond au rapport entre la puissance P_{Drop} du signal lumineux S_{Drop} et la puissance P_{Input} du signal lumineux S_{Input} en fonction de la longueur d'onde λ du signal optique S_{Input}. La fonction de transfert présente plusieurs pics de résonance 18, deux pics de résonance étant représentés en figure 2. L'écart FSR entre deux pics de résonance adjacents est appelé intervalle spectral libre. L'intervalle spectral libre peut être exprimé en fréquence ou en longueur d'onde. Les pics de résonance 18 sont obtenus pour chaque longueur d'onde du signal d'entrée S_{Input} pour laquelle le chemin optique du signal lumineux dans l'anneau 16 correspond au produit de l'indice de réfraction du guide et d'un multiple k entier de la longueur d'onde. Ce nombre entier k est appelé ordre de la résonance.

Selon l'utilisation prévue du microrésonateur 10, la fonction de transfert peut être modifiée notamment par l'application d'une tension aux bornes d'une jonction électrique au niveau du guide d'onde annulaire 16.

Un dispositif optoélectronique peut comprendre plusieurs microrésonateurs en anneau montés en série, les pics de résonance étant décalés d'un microrésonateur à l'autre. Un tel dispositif permet notamment la mise en oeuvre d'un procédé de transfert de données avec multiplexage en longueurs d'onde (WDM, sigle anglais pour Wave Division Multiplexing) dans lequel plusieurs signaux à des longueurs d'onde différentes peuvent être transmis simultanément.

Les guides d'onde 12, 14, 16 du microrésonateur 10 peuvent correspondre à des pistes en silicium entourées par de l'oxyde de silicium. Un inconvénient est que les indices de réfraction des matériaux formant les guides d'onde 12, 14, 16 varient en fonction de la température. Ceci entraîne un décalage de la fonction de transfert du microrésonateur 10 lorsque la température de l'anneau 16 varie.

La figure 3 est une figure analogue à la figure 2 et illustre le décalage de la fonction de transfert du microrésonateur 10 vers les grandes longueurs d'onde lorsque la température de l'anneau 16 augmente. Ce décalage est appelé décalage vers le rouge. En particulier, la puissance P_{Drop} obtenue pour la longueur d'onde λ' est supérieure sur la figure 3 par rapport à la figure 2. Inversement, lorsque la température de l'anneau 16 diminue, la fonction de transfert se décale vers les courtes longueurs d'onde. Ce décalage est appelé décalage vers le bleu.

Il existe des dispositifs adaptés à maintenir l'anneau 16 d'un microrésonateur 10 à une température constante pour stabiliser la fonction de transfert du microrésonateur 10. Une possibilité consiste à prévoir un élément de chauffage à proximité du guide d'onde annulaire 16 commandé par un dispositif de commande pour que la température de l'anneau 16 reste sensiblement constante, par exemple à 0,1-0,2°C près.

Toutefois, dans certains cas, notamment lorsque la température ambiante varie de façon trop importante, il peut ne pas être possible de maintenir la température de l'anneau à une valeur sensiblement constante, par exemple à 0,1-0,2°C près. En outre, la commande de l'élément de chauffage peut entraîner une consommation électrique importante. Par ailleurs, l'élément de chauffage ne permet pas de refroidir l'anneau si la température ambiante dépasse la température cible.

### Résumé

Un mode de réalisation vise à pallier tout ou partie des inconvénients des dispositifs et procédés connus de commande d'au moins un élément de chauffage utilisé pour la régulation de la température de dispositifs optoélectroniques à résonances multiples.

Un autre mode de réalisation vise à proposer un dispositif et un procédé de commande d'au moins un élément de chauffage d'un dispositif optoélectronique à résonances multiples qui soit automatique.

Un autre mode de réalisation vise à proposer un dispositif et un procédé de commande d'au moins un élément de chauffage d'un dispositif optoélectronique à résonances multiples acceptant des variations importantes de la température ambiante.

Un autre mode de réalisation vise à proposer un dispositif et un procédé de commande d'au moins un élément de chauffage d'un dispositif optoélectronique à résonances multiples ayant une consommation électrique réduite.

Ainsi, un mode de réalisation prévoit un procédé de commande d'au moins un premier élément de chauffage d'un dispositif optique à résonances multiples, alternant automatiquement entre au moins un premier mode et un deuxième mode, dans lequel, dans le premier mode, le premier élément de chauffage est commandé par une première boucle de rétroaction pour amener le dispositif optique à fonctionner à un premier pic de résonance et dans lequel, au moins pendant une partie du deuxième mode, la première boucle de rétroaction est rendue divergente pour amener le dispositif optique à fonctionner à un deuxième pic de résonance.

Selon un mode de réalisation, le dispositif optique comprend un premier microrésonateur à résonances multiples, et, dans le premier mode, le premier élément de chauffage est commandé par la première boucle de rétroaction pour amener le premier microrésonateur à fonctionner au premier pic de résonance.

Selon un mode de réalisation, au moins pendant une partie du deuxième mode, la première boucle de rétroaction est rendue divergente pour amener le premier microrésonateur à fonctionner au deuxième pic de résonance.

Selon un mode de réalisation, le dispositif optique comprend, en outre, un deuxième microrésonateur à résonances multiples, et, dans le deuxième mode, un deuxième élément de chauffage du deuxième microrésonateur est commandé pour amener le deuxième microrésonateur à fonctionner au deuxième pic de résonance.

Selon un mode de réalisation, le dispositif optique comprend au moins une première sortie adaptée à fournir un premier signal optique, un premier capteur étant adapté à fournir un premier signal de mesure représentatif d'au moins une partie de la puissance du premier signal optique. Dans le premier mode, il est déterminé un premier signal d'erreur égal à la différence entre une première consigne à un premier niveau et le premier signal de mesure et il est déterminé un premier signal de commande du premier élément de chauffage à partir du premier signal d'erreur.

Selon un mode de réalisation, au moins pendant une partie du deuxième mode, le signe du premier signal d'erreur est inversé.

Selon un mode de réalisation, le passage du premier mode au deuxième mode est réalisé quand le premier signal de commande est inférieur à un premier seuil ou supérieur à un deuxième seuil.

Selon un mode de réalisation, au moins pendant une partie du deuxième mode, la première consigne est mise à un deuxième niveau différent du premier niveau.

Selon un mode de réalisation, dans le premier mode, le deuxième élément de chauffage est commandé par une deuxième boucle de rétroaction pour amener le deuxième microrésonateur à fonctionner à un troisième pic de résonance, correspondant éventuellement au deuxième pic de résonance, et, dans le deuxième mode, la deuxième boucle de rétroaction est rendue divergente pour amener le deuxième microrésonateur à fonctionner à un quatrième pic de résonance, correspondant éventuellement au premier pic de résonance.

Selon un mode de réalisation, le dispositif optique comprend au moins une deuxième sortie adaptée à fournir un deuxième signal optique, un deuxième capteur étant adapté à fournir un deuxième signal de mesure représentatif d'au moins une partie de la puissance du deuxième signal optique. Dans le premier mode, il est déterminé un deuxième signal d'erreur égal à la différence entre une deuxième consigne et le deuxième signal de mesure et il est déterminé un deuxième signal de commande du deuxième élément de chauffage à partir du deuxième signal d'erreur.

Selon un mode de réalisation, lorsque le passage du premier mode au deuxième mode est détecté pour le premier microrésonateur, la deuxième boucle de rétroaction est amenée à fonctionner dans le deuxième mode.

Un mode de réalisation prévoit également un dispositif optoélectronique comprenant un dispositif optique à résonances multiples, au moins un premier élément de chauffage du dispositif optique et un dispositif de commande du premier élément de chauffage adapté à alterner automatiquement entre au moins un premier mode et un deuxième mode, et comprenant une première boucle de rétroaction adaptée, dans le premier mode, à commander le premier élément de chauffage pour amener le dispositif optique à fonctionner à un premier pic de résonance, le dispositif de commande étant adapté, au moins pendant une partie du deuxième mode, à rendre divergente la première boucle de rétroaction pour amener le dispositif optique à fonctionner à un deuxième pic de résonance.

Selon un mode de réalisation, le dispositif optique comprend un premier microrésonateur à résonances multiples, et, dans le premier mode, la première boucle de rétroaction est adaptée à commander le premier élément de chauffage pour amener le premier microrésonateur à fonctionner au premier pic de résonance.

Selon un mode de réalisation, le dispositif optique comprend, en outre, un deuxième microrésonateur à résonances multiples, le dispositif optoélectronique comprenant un deuxième élément de chauffage du deuxième microrésonateur, et, dans le deuxième mode, le dispositif de commande est adapté à commander le deuxième élément de chauffage pour amener le deuxième microrésonateur à fonctionner au deuxième pic de résonance.

Selon un mode de réalisation, le dispositif optique comprend au moins une première sortie adaptée à fournir un premier signal optique, le dispositif de commande comprenant un premier capteur adapté à fournir un premier signal de mesure représentatif d'au moins une partie de la puissance du premier signal optique, et le dispositif de commande comprend un premier module adapté, dans le premier mode, à déterminer un premier signal d'erreur égal à la différence entre une première consigne à un premier niveau et le premier signal de mesure et un deuxième module adapté à déterminer un premier signal de commande du premier élément de chauffage à partir du premier signal d'erreur.

Selon un mode de réalisation, le premier module est adapté, au moins pendant une partie du deuxième mode, à inverser le signe du premier signal d'erreur.

Selon un mode de réalisation, le dispositif de commande est adapté à commander le passage du premier mode au deuxième mode quand le premier signal de commande est inférieur à un premier seuil ou supérieur à un deuxième seuil.

Selon un mode de réalisation, le dispositif de commande est adapté, au moins pendant une partie du deuxième mode, à mettre la première consigne à un deuxième niveau différent du premier niveau.

Selon un mode de réalisation, le dispositif de commande comprend une deuxième boucle de rétroaction adaptée, dans le premier mode, à commander le deuxième élément de chauffage pour amener le deuxième microrésonateur à fonctionner à un troisième pic de résonance, correspondant éventuellement au deuxième pic de résonance, le dispositif de commande étant adapté, au moins pendant une partie du deuxième mode, à rendre divergente la deuxième boucle de rétroaction pour amener le deuxième microrésonateur à fonctionner à un quatrième pic de résonance, correspondant éventuellement au premier pic de résonance.

Selon un mode de réalisation, le dispositif optique comprend au moins une deuxième sortie adaptée à fournir un deuxième signal optique, le dispositif de commande comprenant un deuxième capteur adapté à fournir un deuxième signal de mesure représentatif d'au moins une partie de la puissance du deuxième signal optique, et le dispositif de commande comprend un troisième module adapté, dans le premier mode, à déterminer un deuxième signal d'erreur égal à la différence entre une deuxième consigne et le deuxième signal de mesure et un quatrième module adapté à déterminer un deuxième signal de commande du deuxième élément de chauffage à partir du deuxième signal d'erreur.

Selon un mode de réalisation, le dispositif de commande comprend un cinquième module adapté à amener la deuxième boucle de rétroaction à fonctionner dans le deuxième mode lorsque le passage du premier mode au deuxième mode est détecté pour le premier microrésonateur.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1, décrite précédemment, représente un exemple de microrésonateur optique en anneau ;
la figure 2, décrite précédemment, représente un exemple de la fonction de transfert du microrésonateur de la figure 1 ;
la figure 3, décrite précédemment, illustre le décalage de la fonction de transfert de la figure 2 lors d'une élévation de température ;
la figure 4 représente, sous la forme d'un schéma-bloc, un mode de réalisation d'un dispositif optoélectronique comprenant un dispositif de commande d'un élément de chauffage d'un microrésonateur optique en anneau ;
les figures 5 à 10 sont des schémas électriques de modes de réalisation de modules du dispositif de commande de la figure 4 ;
la figure 11 représente un mode de réalisation d'un automate fini modélisant le fonctionnement d'un module du dispositif de commande représenté en figure 4 ;
la figure 12 illustre l'évolution de la puissance du signal lumineux fourni par le microrésonateur en fonction de la température de l'anneau du microrésonateur lorsque le dispositif de commande de la figure 4 fonctionne selon l'automate fini de la figure 11 ;
la figure 13 représente un autre mode de réalisation d'un automate fini modélisant le fonctionnement d'un module du dispositif de commande représenté en figure 4 ;
la figure 14 illustre l'évolution de la puissance du signal lumineux fourni par le microrésonateur en fonction de la température de l'anneau du microrésonateur lorsque le dispositif de commande de la figure 4 fonctionne selon l'automate fini de la figure 13 ;
les figures 15 et 16 représentent d'autres modes de réalisation d'automates finis modélisant le fonctionnement d'un module du dispositif de commande représenté en figure 4 ;
la figure 17 illustre l'évolution de la puissance du signal lumineux fourni par le microrésonateur en fonction de la température de l'anneau du microrésonateur lorsque le dispositif de commande de la figure 4 fonctionne selon un cas particulier de l'automate fini de la figure 16 ;
la figure 18 représente un autre exemple d'un dispositif optique comprenant des microrésonateurs optiques en anneau ;
la figure 19 représente, sous la forme d'un schéma-bloc, un mode de réalisation d'un dispositif optoélectronique comprenant un dispositif de commande d'éléments de chauffage du dispositif optique de la figure 18 ;
la figure 20 représente un mode de réalisation d'un automate fini modélisant le fonctionnement d'un module du dispositif de commande représenté en figure 19 ;
les figures 21 et 22 représentent, de façon schématique, les parcours de rayons optiques dans un dispositif optoélectronique représenté en figure 19 avec deux microrésonateurs en anneau à deux étapes d'un mode de fonctionnement du dispositif de commande de la figure 19 ;
les figures 23 et 24 illustrent l'évolution de la puissance des signaux lumineux fournis par les microrésonateurs en fonction de la température des anneaux des microrésonateurs pour un mode de fonctionnement du dispositif de commande de la figure 19 ; et
les figures 25 et 26 sont des schémas électriques d'autres modes de réalisation de modules du dispositif de commande de la figure 4.

### Description détaillée

Dans la suite de la description, seuls les éléments nécessaires à la compréhension de l'invention seront décrits et représentés sur les figures. En particulier, les dispositifs optoélectroniques comprenant des microrésonateurs optiques en anneaux sont connus de l'homme du métier et n'ont pas été décrits en détail.

Dans la suite de la description, on appelle "signal binaire" un signal qui alterne entre un premier état constant, par exemple un état bas, noté "0", et un deuxième état constant, par exemple un état haut, noté "1". Les états haut et bas de signaux binaires d'un même circuit électronique peuvent être différents. En pratique, les signaux binaires peuvent correspondre à des tensions ou à des courants qui peuvent ne pas être parfaitement constants à l'état haut ou bas.

Des modes de réalisation particuliers vont être décrits pour un dispositif optoélectronique à résonances multiples comprenant au moins un microrésonateur optique en anneau. Toutefois, ces modes de réalisation peuvent être adaptés à d'autres dispositifs optoélectroniques à résonances multiples, notamment un dispositif optoélectronique comprenant un microrésonateur optique en disque, un interféromètre, par exemple un interféromètre du type Mach-Zehnder ou une cavité laser.

La figure 4 représente un mode de réalisation d'un dispositif optoélectronique 19 comprenant un microrésonateur optique en anneau 10 et un dispositif électronique de commande 20 d'un élément de chauffage 22 du microrésonateur 10. Selon un mode de réalisation, l'élément de chauffage 22 peut comprendre une résistance formée par une piste conductrice, par exemple métallique, qui épouse la forme de l'anneau 16. Selon un autre mode de réalisation, l'élément de chauffage 22 est confondu avec le guide d'onde 16. Dans ce cas, le matériau du guide d'onde 16 peut être choisi pour avoir la résistivité adaptée.

Le dispositif 20 comprend :
un capteur 24 (PH), adapté à fournir un signal analogique S de mesure représentatif de la puissance P_{Drop} du signal lumineux S_{Drop} fournie à l'extrémité Drop du microrésonateur 10 ;
un module 26 (REF) recevant un signal de sélection sel et fournissant une consigne ref ;
un module 28 (COMP) recevant le signal de mesure S et la consigne ref et recevant, en outre, un signal binaire swap de permutation et fournissant un signal analogique E d'erreur qui dépend du signal de permutation swap et de la différence entre le signal de mesure S et la consigne ref ;
un module 30 (PID) de régulation, par exemple de type proportionnel-intégral-dérivé, recevant le signal d'erreur E et fournissant un signal analogique C1 de commande ;
un module 32 (RST) de modification recevant le signal de commande C1 et un signal d'interruption int et fournissant un signal analogique C2 de commande ;
un module 34 (COM) de commande transformant le signal de commande C2 en un signal analogique C3 de commande adapté à l'élément de chauffage 22 ;
un module 36 (LIMIT) recevant le signal C3 et fournissant un signal binaire ovh de surchauffe et un signal binaire udh d'insuffisance de chauffage ; et
un module 38 (RECONF) de supervision recevant les signaux udh et ovh et fournissant les signaux ref, swap, int et fournissant, en outre, un signal binaire lock à un autre système électronique, non représenté, par exemple un système de transmission de données utilisant le microrésonateur 10 comme modulateur.

Chaque module 26, 28, 30, 32, 34, 36, 38 du dispositif 20 peut être réalisé en tout ou partie par un circuit dédié ou par un processeur exécutant une suite d'instructions stockées dans une mémoire.

Le capteur 24 est adapté à convertir au moins une partie du signal lumineux S_{Drop} en un signal électrique analogique S. Le capteur 24 peut comprendre une photodiode ou une photorésistance. Le signal S peut correspondre à une tension ou à un courant représentatif de la puissance P_{Drop} du signal optique S_{Drop}.

Selon un mode de réalisation, le module 28 est adapté à fournir un signal analogique d'erreur E égal à la différence entre la consigne ref et le signal de mesure S lorsque le signal swap est à un premier état, par exemple un état bas noté "0", et égal à la différence entre le signal de mesure S et la consigne ref lorsque le signal swap est à un deuxième état, par exemple un état haut noté "1".

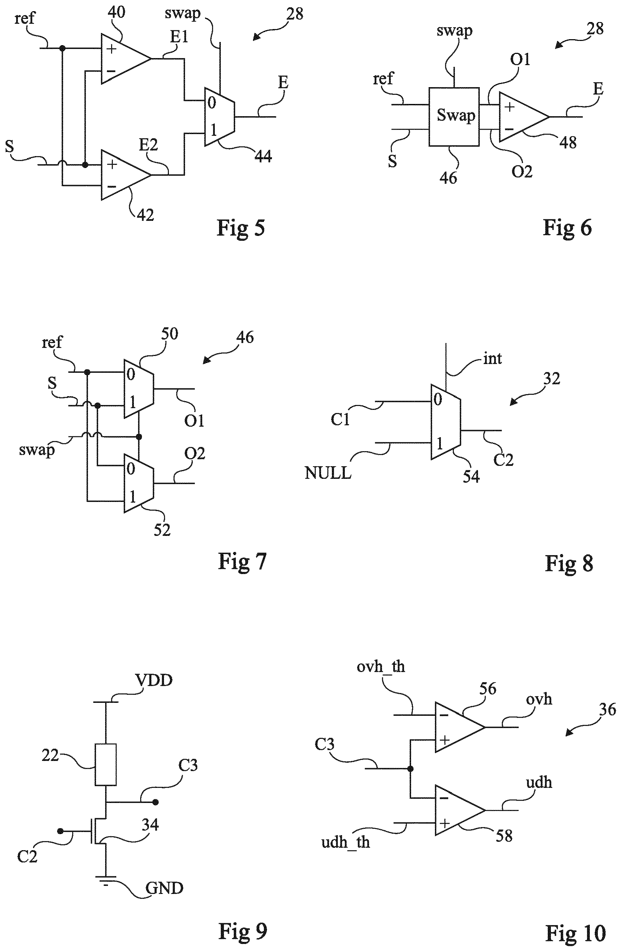

La figure 5 représente un mode de réalisation du module 28 comprenant un premier amplificateur différentiel 40 dont l'entrée non inverseuse (+) reçoit la consigne ref, dont l'entrée inverseuse (-) reçoit le signal S et fournissant un signal E1 qui peut être proportionnel à la différence entre la consigne ref et le signal S. Le module 28 comprend un deuxième amplificateur différentiel 42 dont l'entrée non inverseuse (+) reçoit le signal S, dont l'entrée inverseuse (-) reçoit la consigne ref et fournissant un signal E2 qui peut être proportionnel à la différence entre le signal S et la consigne ref. Selon un mode de réalisation, les signaux E1 et E2 ont la même amplitude en valeur absolue et sont de signes opposés. Le module 28 comprend, en outre, un multiplexeur 44 commandé par le signal swap, recevant le signal E1 à une première entrée et le signal E2 à une deuxième entrée et fournissant le signal E. A titre d'exemple, le signal E fourni par le multiplexeur 44 est égal au signal E2 lorsque le signal swap est à "1" et est égal à E1 lorsque le signal swap est à "0".

La figure 6 représente un autre mode de réalisation du module 28 comprenant un module de permutation 46 (Swap) et un amplificateur différentiel 48 qui fournit le signal E. Le module de permutation 46 est commandé par le signal swap. Il reçoit la consigne ref à une première entrée et le signal S à une deuxième entrée et fournit un premier signal de sortie O1 à l'entrée non inverseuse (+) de l'amplificateur différentiel 48 et un deuxième signal de sortie O2 à l'entrée inverseuse (-) de l'amplificateur différentiel 48. Lorsque le signal swap est à "0", le premier signal de sortie O1 est égal à la consigne ref et le deuxième signal de sortie O2 est égal au signal S. Lorsque le signal swap est à "1", le premier signal de sortie O1 est égal au signal S et le deuxième signal de sortie O2 est égal à la consigne ref.

La figure 7 représente un mode de réalisation du module de permutation 46 de la figure 6. Le module 46 comprend un premier multiplexeur 50 commandé par le signal swap et recevant la consigne ref à une première entrée et le signal S à une deuxième entrée et fournissant le signal O1. A titre d'exemple, le signal O1 fourni par le multiplexeur 50 correspond à la consigne ref lorsque le signal swap est à "0", et est égal au signal S lorsque le signal swap est à "1". Le module 46 comprend un deuxième multiplexeur 52 commandé par le signal swap et recevant le signal S à une première entrée et la consigne ref à une deuxième entrée et fournissant le signal O2. A titre d'exemple, le signal O2 fourni par le multiplexeur 52 est égal au signal S lorsque le signal swap est à "0" et est égal à la consigne ref lorsque le signal swap est à "1".

La figure 8 représente un mode de réalisation du module 32 de la figure 4. Le module 32 comprend un multiplexeur 54 commandé par le signal int et recevant le signal C1 à une première entrée et un signal NULL à une deuxième entrée et fournissant le signal C2. A titre d'exemple, le signal C2 fourni par le multiplexeur 54 correspond au signal C1 lorsque le signal int est à "0", et est égal au signal NULL lorsque le signal int est à "1". Selon un mode de réalisation, le signal NULL est à un niveau tel qu'il entraîne l'absence de chauffage par l'élément de chauffage 22. Le module de supervision 38 peut mettre à "0" le signal int lorsqu'il n'est pas souhaitable de réaliser une régulation de la température de l'anneau 16, par exemple lorsque le microrésonateur 10 ne reçoit pas de signal optique S_{Input}.

La figure 9 représente un mode de réalisation du module 34 et de l'élément de chauffage 22 de la figure 4. Selon un mode de réalisation, l'élément de chauffage 22 est une résistance et le chauffage est dû à la puissance thermique dissipée par la résistance par effet Joule. Le module 34 peut correspondre à un transistor MOS, par exemple à canal N, dont la grille reçoit le signal C2, donc la source est reliée à une source d'un potentiel de référence bas GND, par exemple la masse, et dont le drain est relié à une borne de la résistance 22. L'autre borne de la résistance est reliée à une source d'un potentiel de référence haut VDD. Selon un mode de réalisation, la tension entre le drain du transistor 34 et la masse GND correspond au signal C3. Dans le présent mode de réalisation, le signal C3 est donc une fonction décroissante de la puissance thermique dissipée par la résistance 22.

Selon un autre mode de réalisation, le module 34 peut être un transistor MOS dont la source est reliée au potentiel de référence haut VDD, et dont le drain est relié à une borne de la résistance 22. L'autre borne de la résistance est reliée à la source du potentiel de référence GND. La tension entre le drain du transistor 34 et la masse GND correspond au signal C3, qui est alors une fonction croissante de la puissance thermique dissipée.

La figure 10 représente un mode de réalisation du module 36 de détection d'un état de surchauffe ou de chauffage insuffisant dans le cas où le signal C3 est une fonction croissante de la puissance dissipée. Le module 36 comprend un premier comparateur 56 recevant le signal C3 à son entrée non inverseuse (+) et un signal ovh_th à son entrée inverseuse (-) et fournissant le signal binaire ovh. Le module 36 comprend un deuxième comparateur 58 recevant le signal C3 à son entrée inverseuse (-) et un signal udh_th à son entrée non inverseuse (+) et fournissant le signal binaire udh.

Le signal ovh_th est représentatif d'un seuil de chauffage maximal au-delà duquel il est considéré que l'anneau 16 est en surchauffe. A titre d'exemple, le signal ovh est à l'état "1" lorsque le signal de commande C3 est supérieur au seuil ovh_th ce qui signifie que l'anneau 16 est en surchauffe et le signal ovh est à l'état "0" lorsque le signal de commande C3 est inférieur au seuil ovh_th ce qui signifie que l'anneau 16 n'est pas en surchauffe. Le signal udh_th est représentatif d'un seuil de chauffage minimal en dessous duquel il est considéré que l'anneau n'est pas chauffé suffisamment. A titre d'exemple, le signal udh est à l'état "0" lorsque le signal de commande C3 est supérieur au seuil udh th ce qui signifie que l'anneau 16 est chauffé suffisamment et le signal udh est à l'état "1" lorsque le signal de commande C3 est inférieur au seuil udh_th ce qui signifie que l'anneau n'est pas chauffé suffisamment.

Selon un mode de réalisation, le module 26 est adapté à fournir la consigne ref à un niveau parmi plusieurs niveaux en fonction du signal sel. A titre d'exemple, le module 26 peut comprendre plusieurs transistors MOS montés en parallèle, l'ensemble des transistors étant monté en série avec une résistance. Le signal sel peut commander la fermeture ou l'ouverture des transistors et la consigne ref peut être la tension aux bornes de la résistance ou le courant traversant la résistance. Les niveaux de la consigne ref sont alors obtenus par la fermeture sélective des transistors.

Le module 30 est de préférence un régulateur PID analogique. De préférence, le module 30 a majoritairement une action intégrale. Selon un mode de réalisation, le gain de la partie proportionnelle du régulateur PID est adapté pour que le signal de commande C3 n'entraîne pas d'oscillations trop importantes du signal de mesure S par rapport à la consigne ref.

Selon un mode de réalisation, la régulation de la température de l'anneau 16 est réalisée par l'élément de chauffage 22. Pour qu'une régulation puisse être réalisée, il est souhaitable que l'élément de chauffage 22 soit toujours en train de chauffer l'anneau 16, c'est-à-dire que le signal de commande C3 reste au-dessus du seuil udh_th. Toutefois, il n'est pas souhaitable que la puissance thermique dissipée par l'élément de chauffage 22 soit trop importante, notamment pour des raisons de consommation électrique et pour ne pas détériorer le microrésonateur 10. Il est donc souhaitable que l'élément de chauffage 22 ne chauffe pas trop l'anneau 16, c'est-à-dire que le signal de commande C3 reste au-dessous du seuil ovh_th. A titre d'exemple, le seuil ovh_th correspond à une température d'anneau Tring supérieure à la température ambiante d'environ 25°C et le seuil udh_th correspond à une température d'anneau Tring supérieure à la température ambiante d'environ 2°C.

Selon un mode de réalisation, la commande de l'élément de chauffage 22 par le dispositif de commande 20 est réalisée à partir du signal analogique S de mesure fourni par le capteur 24 et qui est représentatif de la puissance P_{Drop} du signal lumineux S_{Drop} fourni à l'extrémité Drop du microrésonateur 10. Le signal S n'est pas un signal représentatif de la température du microrésonateur 10. La commande de l'élément de chauffage 22 n'est donc pas réalisée à partir d'un signal représentatif de la température du microrésonateur 10. De façon avantageuse, le dispositif 20 ne comprend pas de capteur de température. Le dispositif de commande 20 réalise une régulation du signal de commande C3 de l'élément de chauffage 22 mais ne réalise pas directement une régulation de la température du microrésonateur 10. En effet, à aucun moment le dispositif de commande 20 ne met en oeuvre un signal représentatif de la température du microrésonateur 10.

Le dispositif optoélectronique 19 peut, en outre, comprendre un dispositif de mesure de la puissance optique du signal S_{Input} fourni au guide d'onde 12 et qui est utilisée comme puissance optique de référence. Selon un mode de réalisation, le guide d'onde 12 peut comprendre, en amont de l'anneau 16, un diviseur optique de faisceau qui permet d'extraire une fraction connue du signal optique incident. La puissance optique de cette fraction du signal optique incident peut être mesurée. A partir du rapport connu entre la puissance optique de la fraction extraite et la puissance optique du signal optique incident, la puissance optique du signal S_{Input} peut être déterminée. Selon un autre mode de réalisation, la puissance optique du signal incident S_{Input} peut être connue au préalable.

Le dispositif de commande 20 peut fonctionner selon des premier et deuxième modes de fonctionnement. Dans le premier mode de fonctionnement, appelé également mode de régulation sans décalage, par exemple tant que le signal de commande C3 est compris entre les seuils udh_th et ovh_th, la commande de l'élément de chauffage 22 se fait par une boucle de rétroaction dans laquelle l'élément de chauffage 22 est commandé pour que le signal de mesure S suive la consigne ref, c'est-à-dire pour que la puissance du signal optique S_{Drop} reste sensiblement constante à un niveau déterminé. Lorsque le signal de commande C3 s'élève au-dessus du seuil ovh_th ou diminue au-dessous du seuil udh_th, le dispositif de commande 20 passe dans le deuxième mode de fonctionnement, appelé également mode de régulation avec décalage, dans lequel l'élément de chauffage 22 est commandé pour décaler la fonction de transfert du microrésonateur 10 vers le rouge ou vers le bleu jusqu'à un nouveau point de fonctionnement dans lequel la puissance du signal optique S_{Drop} est à nouveau au niveau déterminé et dans lequel le signal de commande C3 est, par exemple, à nouveau compris entre les seuils udh_th et ovh_th afin de repasser dans le premier mode de fonctionnement.

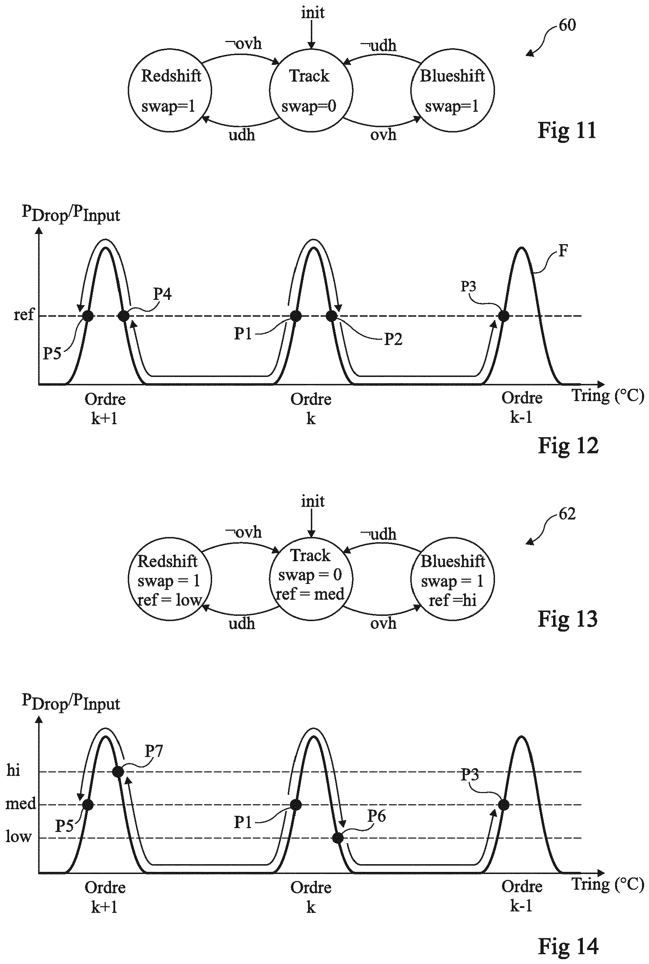

La figure 11 représente un automate fini 60 modélisant le fonctionnement d'un mode de réalisation du module 38 de supervision du dispositif 20 de commande représenté en figure 4. Dans ce mode de réalisation, le module de supervision 38 peut fonctionner dans trois états appelés "Track", "Redshift" et "Blueshift". Le fonctionnement du module de supervision 38 débute dans l'état "Track". Dans cet état, le module de supervision 38 fournit le signal swap à l'état "0". Dans les états "Redshift" et "Blueshift", le module de supervision 38 met le signal swap à "1". Le module de supervision 38 passe de l'état "Track" à l'état "Redshift" lorsque le signal udh passe à "1" et passe de l'état "Redshift" à l'état "Track" lorsque le signal ovh passe à "0". Le module de supervision 38 passe de l'état "Track" à l'état "Blueshift" lorsque le signal ovh passe à "1" et passe de l'état "Blueshift" à l'état "Track" lorsque le signal udh passe à "0". Dans le mode de régulation sans décalage, l'automate fini 60 est dans l'état "Track". Dans le mode de régulation avec décalage, l'automate fini 60 peut être dans les états "Redshift", "Blueshift" ou "Track".

La figure 12 illustre un exemple d'évolution du rapport P_{Drop}/P_{Input} entre la puissance du signal optique S_{Drop} et la puissance du signal optique S_{Input} en fonction de la température Tring de l'anneau 16 du microrésonateur 10 lorsque le dispositif de commande 20 fonctionne selon l'automate fini 60 de la figure 11. En figure 12, on a représenté la fonction de transfert F du microrésonateur 10. Selon le présent mode de réalisation, la consigne ref est sensiblement constante.

Le microrésonateur 10 reçoit à l'entrée Input un signal optique S_{Input} monochromatique, par exemple fourni par un laser. On suppose que le dispositif de commande 20 est au point de fonctionnement P1 et que le module de supervision 38 est à l'état "Track". Les signaux udh, ovh et swap sont à "0". La régulation de la commande de l'élément de chauffage 22 est alors adaptée pour maintenir le dispositif au point de fonctionnement P1 lors des variations de la température Tring de l'anneau 16 tant que le signal de commande C3 reste compris entre les signaux udh_th et ovh_th. Le point P1 est un point d'équilibre stable pour la régulation réalisée à l'état "Track". Selon un mode de réalisation, le point de fonctionnement P1 est situé sur le pic de résonance d'ordre k du microrésonateur 10. Selon un mode de réalisation, le point de fonctionnement P1 est situé à mi-hauteur, par exemple du côté ascendant, du pic de résonance d'ordre k du microrésonateur 10. La précision de la régulation du point de fonctionnement dépend du facteur de qualité Q des pics de résonance du microrésonateur 10. A titre d'exemple, la précision de régulation sur la longueur d'onde est de l'ordre de 10Q.

Lorsque la température ambiante Tamb au voisinage de l'anneau 16 augmente fortement, le signal de commande C3 peut diminuer au-dessous du seuil udh_th pour maintenir la température Tring à une valeur permettant le bon fonctionnement du microrésonateur. Le chauffage de l'anneau 16 est alors inférieur au chauffage minimal. Le module 36 met alors le signal udh à "1". Le module de supervision 38 passe alors à l'état "Redshift" et met le signal swap à "1". La régulation mise en oeuvre par les modules 28, 30, 32 et 34 est réalisée en inversant le signal S et la consigne ref. Comme le signal S est alors supérieur à la consigne ref, l'élément de chauffage 22 est commandé pour augmenter la puissance thermique fournie. L'anneau 16 est donc chauffé, ce qui entraîne un décalage vers le rouge de la fonction de transfert du microrésonateur 10. Le point de fonctionnement se déplace alors jusqu'au point P2 pour lequel le signal de mesure S est égal à la consigne ref et qui correspond à un point d'équilibre stable pour la régulation réalisée à l'état "Redshift". Au point de fonctionnement P2, le signal de commande C3 étant au-dessous du seuil ovh_th, le signal ovh est à "0". Le module de supervision 38 passe alors à l'état "Track" et met le signal swap à "0". La régulation est alors réalisée sans permutation de la consigne ref et du signal de mesure S. Le point P2 est un point d'équilibre instable pour la régulation réalisée à l'état "Track" de sorte que l'élément de chauffage 22 est à nouveau commandé pour chauffer l'anneau 16. Le point de fonctionnement se déplace alors jusqu'au point P3 pour lequel le signal de mesure S est égal à la consigne ref et qui est un point de fonctionnement stable pour la régulation réalisée à l'état "Track". Selon un mode de réalisation, la régulation réalisée par le module 30 de régulation impose une erreur résiduelle de la commande C3 qui permet d'assurer que le point de fonctionnement se déplace bien depuis le point P2 vers le point P3. La durée du passage entre les points P2 et P3 est inférieure à un cycle de l'horloge qui cadence le module de supervision 38. Le point de fonctionnement s'est donc déplacé de P1 à P3 qui se trouve à la résonance d'ordre k-1.

Lorsque la température ambiante Tamb au voisinage de l'anneau 16 diminue fortement, le signal de commande C3 peut augmenter au-dessus du seuil ovh_th pour maintenir la température Tring à une valeur permettant le bon fonctionnement du microrésonateur. Le chauffage de l'anneau 16 est alors supérieur au chauffage maximal. Le module 36 met le signal ovh à "1". Le module de supervision 38 passe alors à l'état "Blueshift" et met le signal swap à "1". La régulation mise en oeuvre par les modules 28, 30, 32 et 34 est réalisée en inversant le signal S et la consigne ref. Comme le signal S est inférieur à la consigne ref, l'élément de chauffage 22 est alors commandé pour diminuer, voire arrêter, la puissance thermique fournie. L'anneau 16 est donc moins chauffé ou n'est plus chauffé, ce qui entraîne un décalage vers le bleu de la fonction de transfert du microrésonateur 10. Le point de fonctionnement se déplace alors jusqu'au point P4 pour lequel le signal de mesure S est égal à la consigne ref et qui correspond à un point d'équilibre stable pour la régulation réalisée à l'état "Blueshift". Au point de fonctionnement P4, le signal de commande C3 étant au-dessus du seuil udh_th, le signal udh est à "0". Le module de supervision 38 passe alors à l'état "Track" et met le signal swap à "0". La régulation est alors réalisée sans permutation de la consigne ref et du signal de mesure S. Le point P4 est un point d'équilibre instable pour la régulation réalisée à l'état "Track" de sorte que l'élément de chauffage 22 est à nouveau commandé pour ne pas chauffer l'anneau 16. Le point de fonctionnement se déplace alors jusqu'au point P5 pour lequel le signal de mesure S est égal à la consigne ref et qui est un point de fonctionnement stable pour la régulation réalisée à l'état "Track". Selon un mode de réalisation, la régulation réalisée par le module 30 de régulation impose une erreur résiduelle de la commande C3 qui permet d'assurer que le point de fonctionnement se déplace bien depuis le point P4 vers le point P5. La durée du passage entre les points P4 et P5 est inférieure à un cycle de l'horloge qui cadence le module de supervision 38. Le point de fonctionnement s'est donc déplacé de P1 à P5 qui se trouve à la résonance d'ordre k+1.

Dans le mode de réalisation décrit précédemment, la durée d'un cycle de l'horloge qui cadence le module de supervision 38 est supérieure à la durée de passage entre deux points de fonctionnement dans le mode de régulation sans décalage et dans le mode de régulation avec décalage. Dans le cas où la durée d'un cycle de l'horloge qui cadence le module de supervision 38 peut être inférieure à la durée de passage entre deux points de fonctionnement dans le mode de régulation sans décalage et dans le mode de régulation avec décalage, l'automate fini 60 modélisant le fonctionnement du module 38 de supervision du dispositif 20 de commande peut être modifié de façon notamment à prévoir la détection du passage du signal udh à "0" pour sortir de l'état "Redshift" et la détection du passage du signal ovh à "0" pour sortir de l'état "Blueshift".

Dans le mode de régulation sans décalage, la fourniture du signal de commande C3 est réalisée par le dispositif de commande 20 par une boucle de rétroaction qui comprend au moins le point P1 comme point d'équilibre stable. Pendant le mode de régulation avec décalage, la boucle de rétroaction mise en oeuvre par le dispositif de commande 20 pour la fourniture du signal de commande C3 est modifiée de façon que le point P1 devienne un point d'équilibre instable. Selon un mode de réalisation, ceci est réalisé en inversant le signal S et la consigne ref. La boucle de rétroaction mise en oeuvre par le dispositif de commande 20 est donc fermée en permanence lorsque la régulation de la commande de l'élément de chauffage 22 est réalisée. L'expression "rendre divergente une boucle de rétroaction" signifie modifier la boucle de rétroaction fermée pour qu'au moins un point d'équilibre stable vers lequel la boucle de rétroaction converge devienne un point d'équilibre instable duquel la boucle de rétroaction fermée diverge. Selon un mode de réalisation, dans le mode de régulation avec décalage, tous les points d'équilibre stables de la boucle de rétroaction mise en oeuvre par le dispositif de commande 20 sont transformés en points d'équilibre instables.

La fonction de transfert du microrésonateur 10 comprend des pics de résonance, chaque pic de résonance comprenant un front montant et un front descendant. Selon un mode de réalisation, dans le mode de régulation sans décalage, tous les points d'équilibre stables de la régulation mise en oeuvre par le dispositif de commande 20 sont situés du même côté des pics de résonance de la fonction de transfert du microrésonateur 10, c'est-à-dire que tous les points d'équilibre stables sont situés sur des fronts montants de pics de résonance ou tous les points d'équilibre stables sont situés sur des fronts descendants de pics de résonance. Dans le mode de régulation avec décalage, les points d'équilibre stables de la régulation mise en oeuvre par le dispositif de commande 20 sont situés sur les fronts opposés des pics de résonance par rapport au mode de régulation avec décalage. Ceci signifie que, par exemple, lorsque les points d'équilibre stables sont situés sur des fronts montants de pics de résonance dans le mode de régulation sans décalage, ils sont situés sur des fronts descendants de pics de résonance dans le mode de régulation avec décalage. Sur la figure 12, les points d'équilibre stables sont représentés, à titre d'exemple, sensiblement à mi-hauteur des pics de résonance. Toutefois, les positions précises des points d'équilibre stables de la fonction de transfert du microrésonateur 10 sont notamment choisies en fonction de critères de stabilité de la régulation réalisée par le dispositif de commande 20. Selon un mode de réalisation, lors de la régulation du signal de commande C3 par le dispositif de commande 20, le point de fonctionnement P1 du microrésonateur peut être plus proche de la base que du sommet du pic de résonance.

De façon avantageuse, la régulation mise en oeuvre par le dispositif de commande 20 est rapide. En outre, elle ne comprend pas d'étape initiale d'étalonnage.

La figure 13 représente un automate fini 62 modélisant le fonctionnement d'un autre mode de réalisation du module 38 de supervision du dispositif 20 de commande représenté en figure 4. L'automate 62 est identique à l'automate 60 à la différence que la consigne ref peut prendre trois valeurs selon le signal de sélection sel : une valeur haute hi, une valeur moyenne med et une valeur basse low. La valeur moyenne med correspond au point de fonctionnement souhaité. Dans l'état "Track", le module de supervision 38 fournit un signal sel au module 26 pour que la consigne ref soit au niveau med. Dans l'état "Redshift", le module de supervision 38 fournit un signal sel au module 26 pour que la consigne ref soit au niveau low. Dans l'état "Blueshift", le module de supervision 38 fournit un signal sel pour que la consigne ref soit au niveau hi.

La figure 14 est une figure analogue à la figure 12 lorsque le dispositif de commande 20 fonctionne selon l'automate fini 62 de la figure 13.

Le fonctionnement du dispositif de commande 20 est identique à ce qui a été décrit précédemment en relation avec la figure 12 aux différences suivantes :
lorsque le module de supervision 38 passe de l'état "Track" à l'état "Redshift", la consigne ref est mise au niveau low, de sorte que l'écart initial entre le signal S et la consigne ref est augmenté, ce qui évite de se placer en un point d'équilibre instable de l'état "Track" et accélère le décalage vers le rouge de la fonction de transfert du microrésonateur 10 ;
le point de fonctionnement P2 est remplacé par un point de fonctionnement P6 pour lequel la consigne ref est au niveau low de façon que, au point P6, lorsque le module de supervision 38 passe de l'état "Redshift" à l'état "Track" et met la consigne ref au niveau med, l'écart initial entre le signal S et la consigne ref favorise la poursuite du décalage vers le rouge jusqu'au point de fonctionnement P3 ;
lorsque le module de supervision 38 passe de l'état "Track" à l'état "Blueshift", la consigne ref est mise au niveau hi, de sorte que l'écart initial entre le signal S et la consigne ref est augmenté, ce qui évite de se placer en un point d'équilibre instable de l'état "Track" et accélère le décalage vers le bleu de la fonction de transfert du microrésonateur 10 ;
le point de fonctionnement P4 est remplacé par un point de fonctionnement P7 pour lequel la consigne ref est au niveau hi de façon que, au point P7, lorsque le module de supervision 38 passe de l'état "Blueshift" à l'état "Track" et met la consigne ref au niveau med, l'écart initial entre le signal S et la consigne ref favorise la poursuite du décalage vers le bleu jusqu'au point de fonctionnement P5.

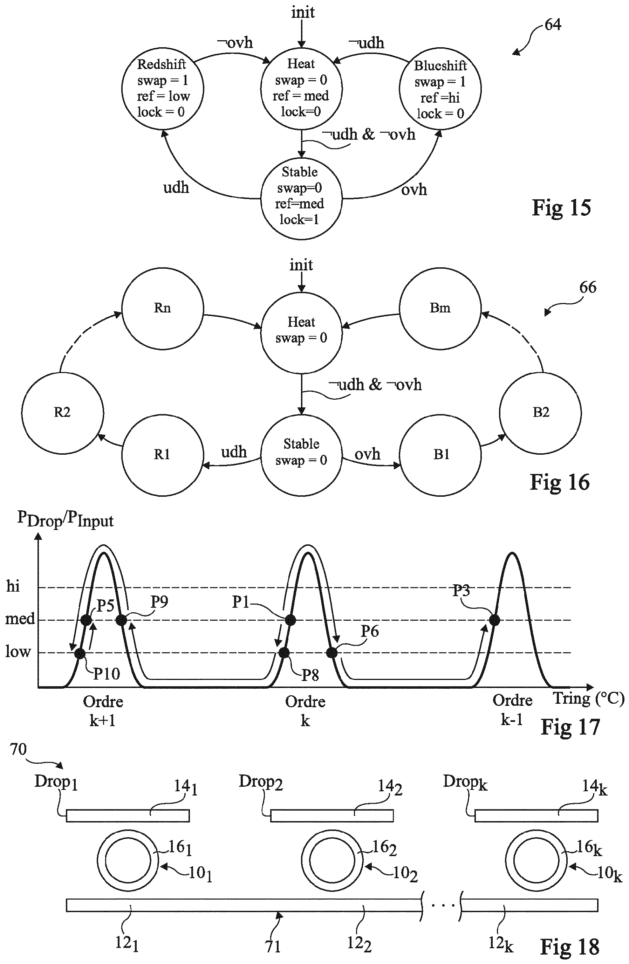

La figure 15 représente un automate fini 64 modélisant le fonctionnement d'un autre mode de réalisation du module de supervision 38 du dispositif de commande 20 adapté au cas où le module de supervision 38 fournit, en outre, un signal lock qui est à "1" dans le mode de régulation sans décalage, c'est-à-dire, dans le présent mode de réalisation, lorsque le signal de commande C3 est compris entre les seuils udh_th et ovh_th, et qui est à "0" dans le mode de régulation avec décalage, c'est-à-dire, dans le présent mode de réalisation, lorsque le signal de commande C3 n'est plus compris entre les seuils udh_th et ovh_th.

L'automate 64 est identique à l'automate 62 à la différence que l'état "Track" est remplacé par deux états "Heat" et "Stable" dans chacun desquels le signal swap est à "0" et la consigne ref est au niveau med. Le signal lock est à "0" dans l'état "Heat" et à "1" dans l'état "Stable". En outre, dans les états "Redshift" et "Blueshift", le signal lock est à "0". Le module de supervision 38 passe de l'état "Stable" à l'état "Redshift" lorsque le signal udh passe à "1" et passe de l'état "Stable" à l'état "Blueshift" lorsque le signal ovh passe à "1". Le module de supervision 38 passe de l'état " Redshift" à l'état "Heat" lorsque le signal ovh passe à "0" et passe de l'état "Blueshift" à l'état "Heat" lorsque le signal udh passe à "0". Le module de supervision 38 passe de l'état "Heat" à l'état "Stable" lorsque les signaux udh et ovh sont à zéro.

Le premier mode de fonctionnement correspond alors à l'état "Stable" tandis que le deuxième mode de fonctionnement correspond aux états "Redshift", "Blueshift" et "Heat".

Le fonctionnement de l'automate 64 est identique à ce qui a été décrit précédemment en relation avec la figure 14 à la différence qu'aux points de fonctionnement P1, P3 et P5, le module de supervision 38 est dans l'état "Stable" et que, entre les points de fonctionnement P6 et P3 et entre les points de fonctionnement P7 et P5, le module de supervision 38 est dans l'état "Heat".

La figure 16 représente la structure générale d'un automate fini 66 modélisant le fonctionnement d'un autre mode de réalisation du module de supervision 38 du dispositif de commande 20. Dans ce mode de réalisation, l'état "Redshift" est remplacé par n états successifs R1 à Rn, où n est un nombre entier supérieur ou égal à 1. Le passage de l'état "Stable" à l'état "R1" est réalisé lorsque le signal udh est à "1". Pour au moins l'un des états R1 à Rn, le signal swap est à "1". De plus, l'état "Blueshift" est remplacé par m états successifs B1 à Bm, où m est un nombre entier supérieur ou égal à 1. Pour au moins l'un des états B1 à Bm, le signal swap est à "1". Le passage de l'état "Stable" à l'état "B1" est réalisé lorsque le signal ovh est à "1".

La figure 17 est une figure analogue à la figure 14 lorsque le dispositif de commande 20 fonctionne selon un mode de réalisation de l'automate fini 66 de la figure 16 avec n égal à 1 et m égal à 3. Dans ce mode de réalisation, l'état R1 correspond à l'état "Redshift" décrit précédemment. Pour l'état B1, la consigne ref est mise à low et le signal swap est à "0". Pour l'état B2, la consigne ref est mise à med et le signal swap est à "1". Pour l'état B3, la consigne ref est mise à low et le signal swap est à "0". Le point de fonctionnement passe de P1 à P8 à l'état B1, de P8 à P9 à l'état B2, de P9 à P10 à l'état B3 et de P10 à P5 à l'état "Heat".

Ce mode de réalisation permet de n'utiliser seulement que les niveaux "med" et "low" pour la consigne ref lors de la régulation de l'élément de chauffage 22. Il peut être avantageux de ne pas utiliser le niveau "hi" pour la consigne ref dans la mesure où le facteur de qualité de la fonction de transfert du microrésonateur 10 est généralement élevé, c'est-à-dire que les pics de résonance de la fonction de transfert du microrésonateur 10 sont généralement étroits. L'utilisation d'un niveau "hi" pour la consigne ref peut entraîner des taux de variation élevés du signal de commande C3 de l'élément de chauffage 22, ce qui peut ne pas être souhaitable.

Selon un mode de réalisation, dans le cas où le microrésonateur 10 est utilisé comme modulateur par un système de transmission de données, la régulation du signal de commande C3 de l'élément de chauffage 22 peut n'être mise en oeuvre qu'en l'absence de transmission de données. Lorsque des données sont transmises, la régulation mise en oeuvre par le dispositif de commande 20 peut être temporairement interrompue. Selon un mode de réalisation, cela peut être réalisé en rendant flottante la grille du transistor MOS 34 représenté en figure 9, par exemple en mettant la sortie du multiplexeur 54 représenté en figure 8 à haute impédance. La capacité du transistor MOS peut être suffisante pour maintenir le signal C2 sensiblement constant pendant la durée de la transmission. Selon un autre mode de réalisation, un condensateur supplémentaire peut être ajouté pour maintenir le signal C2 sensiblement constant pendant la durée de la transmission.

Le point de fonctionnement auquel est amené le microrésonateur 10 pendant la transmission de données peut être différent du point de fonctionnement auquel est amené le microrésonateur 10 en l'absence de transmission de données et peut, en particulier, dépendre du fait que des données sont émises ou reçues. A titre d'exemple, pendant une phase de réception de données, le point de fonctionnement du microrésonateur peut être rapproché du sommet du pic de résonance pour réduire les pertes d'insertion vers le port Pdrop qui reçoit le signal S modulé. Pendant une phase d'émission de données, le point de fonctionnement du microrésonateur peut être rapproché de la base du pic de résonance (c'est-à-dire éloigné du sommet), pour augmenter la dynamique du signal émis. Pendant la transmission de données, la position précise du point de fonctionnement peut être modifiée par un autre mécanisme, par exemple par l'application d'une tension aux bornes d'une jonction électrique au niveau du microrésonateur 10.

La figure 18 représente un exemple de dispositif optique 70 comprenant plusieurs microrésonateurs en anneau 10₁ à 10_{K}, où K est un nombre entier supérieur ou égal à 2. Dans la suite de la description, les éléments de chaque microrésonateur 10ᵢ, i étant un nombre entier variant de 1 à K, identiques à ceux du microrésonateur 10 représenté en figure 1, sont désignés avec les mêmes références suivi de l'indice "i". Dans le présent exemple, les guides d'onde 12ᵢ sont disposés en série et forment un guide d'onde unique 71.

Le dispositif optique 70 peut être utilisé pour la mise en oeuvre d'un procédé de transfert de données avec multiplexage en longueurs d'onde (WDM, sigle anglais pour Wave Division Multiplexing) dans lequel plusieurs signaux optiques de longueur d'onde différentes, notamment jusqu'à K signaux optiques, peuvent être transmis simultanément sur le guide d'onde 71 et dans lequel les fonctions de transfert des microrésonateurs en anneau 10ᵢ sont décalées les unes des autres.

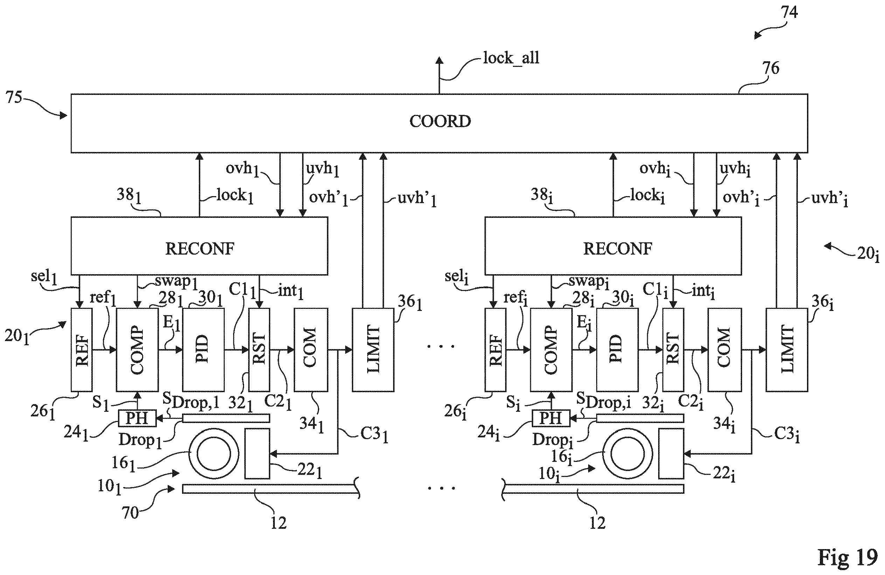

La figure 19 représente, sous la forme d'un schéma-bloc, un mode de réalisation d'un dispositif optoélectronique 74 comprenant le dispositif optique 70 de la figure 18 et comprenant un dispositif de commande 75 d'éléments de chauffage du dispositif optique 70.

Le dispositif de commande 75 comprend, pour chaque microrésonateur en anneau 10ᵢ, i variant de 1 à K, un dispositif de commande 20ᵢ qui est sensiblement identique au dispositif de commande 20 représenté en figure 4, les éléments de chaque dispositif de commande 20ᵢ identiques avec le dispositif de commande 20 représenté en figure 4 étant désignés avec les mêmes références suivi de l'indice "i". Le dispositif de commande 75 comprend, en outre, un module de coordination 76 (COORD) qui reçoit les signaux lockᵢ et fournit un signal lock_all, notamment à un autre système électronique, par exemple un système de transmission de données utilisant les microrésonateurs 10ᵢ comme modulateurs.

A la différence du dispositif de commande 20 représenté en figure 4 dans lequel les signaux ovh et udh sont fournis par le module 36 directement au module de supervision 38, les signaux ovhᵢ et udhᵢ sont fournis par le module de coordination 76 à chaque module de supervision 38ᵢ et les signaux fournis par chaque module 36ᵢ sont appelés ovh'ᵢ et udh'ᵢ. Le signal ovh'ᵢ peut être déterminé par chaque module 36ᵢ comme cela a été décrit précédemment pour le signal ovh, et le signal udh'ᵢ peut être déterminé par chaque module 36ᵢ comme cela a été décrit précédemment pour le signal ovh. Chaque module de supervision 38ᵢ peut fonctionner selon l'un des automates finis 62, 64, 66 décrits précédemment.

Selon un mode de réalisation, le décalage en longueur d'onde entre les pics de résonance de deux fonctions de transfert adjacentes de microrésonateurs 10ᵢ est égal sensiblement à FSR/K. En outre, il peut être fourni en entrée du guide d'onde des signaux optiques S_{Input,j}, où j varie de 1 à L, L étant un nombre entier inférieur ou égal à K. Chaque signal S_{Input, j} est un signal monochromatique de longueur d'onde λⱼ, l'écart entre les longueurs d'onde λⱼ et λⱼ₊₁ étant sensiblement égal à FSR/K. Chaque microrésonateur 10ᵢ est susceptible de capter l'un des signaux optiques S_{Input,j}.

Lors d'une opération de décalage, la fonction de transfert d'au moins un microrésonateur 10ᵢ est décalée en longueur d'onde de FSR/K de sorte que le microrésonateur 10ᵢ capte un autre signal optique. De préférence, lors d'une opération de décalage, toutes les fonctions de transfert des microrésonateurs 10i sont décalées de FSR/K de sorte que, après l'opération de décalage, chaque microrésonateur 10ᵢ capte un autre signal optique S_{Input,j}. Ceci permet, de façon avantageuse, lors d'une opération de décalage, de réduire l'ampleur du décalage de la fonction de transfert de chaque microrésonateur 10ᵢ.

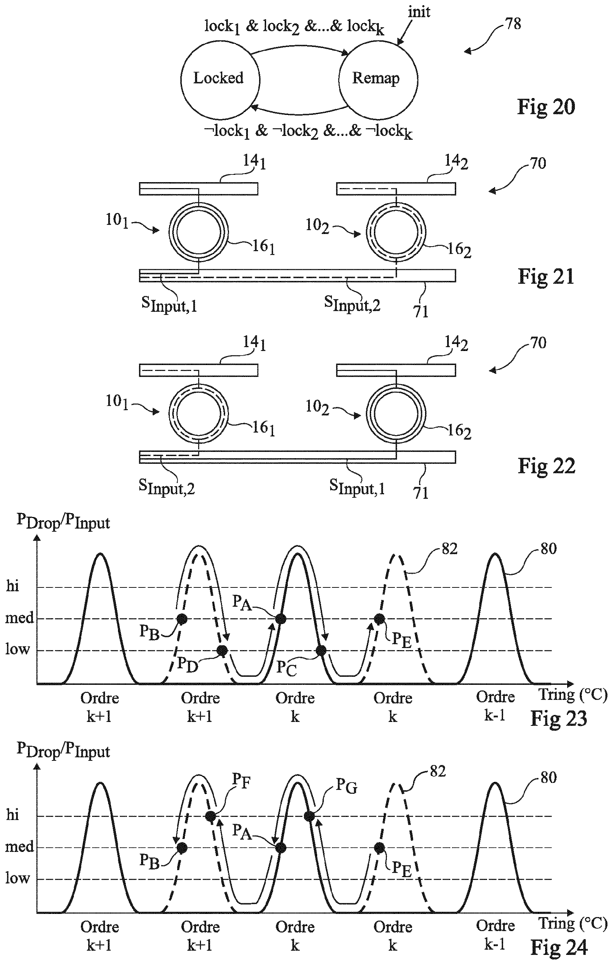

La figure 20 représente un automate fini 78 modélisant le fonctionnement d'un mode de réalisation du module de coordination 76 du dispositif de commande 75 représenté en figure 19. L'automate 78 comprend un état "Remap" et un état "Locked". Le module 76 passe de l'état "Remap" à l'état "Locked" lorsque tous les signaux lockᵢ, i variant de 1 à K, sont à "1". Le module 76 passe de l'état "Locked" à l'état "Remap" lorsque au moins l'un des signaux lockᵢ, i variant de 1 à K, est à "0".

Dans l'état "Locked", tous les modules de supervision 38i sont dans l'état "Stable". Ceci signifie que la régulation de la température de l'anneau 16ᵢ de chaque microrésonateur 10ᵢ est réalisée selon le premier mode de fonctionnement indépendamment des autres microrésonateurs 10ᵢ. Le passage à l'état "Remap" signifie que l'un des modules 36_{w}, w étant un entier entre 1 et K, a fourni au module de supervision 78 le signal ovh'_{w} à l'état "1" ou le signal udh'_{w} à l'état "1". Selon un mode de réalisation, le module de supervision 76 commande alors le décalage vers le bleu ou vers le rouge de toutes les fonctions de transfert des microrésonateurs 10ᵢ, i variant de 1 à K. A titre d'exemple, si le passage à l'état "Remap" est déclenché par la mise à "1" du signal ovh'_{w}, le module de supervision 78 met tous les signaux ovhᵢ à "1" et si le passage à l'état "Remap" est déclenché par la mise à "1" du signal udh'_{w}, le module de supervision 78 met tous les signaux udhᵢ à "1". De ce fait, les décalages des fonctions de transfert de tous les microrésonateurs 38ᵢ sont tous réalisés dans le même sens, vers le bleu ou vers le rouge.

Les figures 21 à 24 illustrent le fonctionnement du dispositif de commande 75 représenté en figure 19 dans le cas où le dispositif optique 70 comprend deux microrésonateurs 10₁ et 10₂ en anneau.

La figure 21 représente de façon schématique les parcours de deux rayons optiques dans le dispositif optique 70 avant une opération de décalage. Le guide d'onde 71 reçoit un premier signal optique monochromatique S_{Input,1} représenté de façon schématique par une ligne continue et un deuxième signal optique monochromatique S_{Input,2} représenté de façon schématique par une ligne tiretée. Avant l'opération de décalage, les fonctions de transfert des microrésonateurs en anneau 10₁ et 10₂ sont adaptées pour que le premier signal optique S_{Input,1} soit capté sensiblement en totalité, par exemple à plus de 99 %, par le premier microrésonateur 10₁ et que le deuxième signal optique S_{Input,2} soit capté sensiblement en totalité, par exemple à plus de 99 %, par le deuxième microrésonateur 10₂.

La figure 22 représente de façon schématique les parcours de rayons optiques dans le dispositif optique 70 après une opération de décalage. Les fonctions de transfert des microrésonateurs en anneau 10₁ et 10₂ ont été décalées de façon que le premier signal optique S_{Input,1} soit capté sensiblement en totalité, par exemple à plus de 99 %, par le deuxième microrésonateur 10₂ et que le deuxième signal optique S_{Input,2} soit capté sensiblement en totalité, par exemple à plus de 99 %, par le premier microrésonateur 10₁.

Les figures 23 et 24 représentent l'évolution du point de fonctionnement du dispositif de commande 75 associé au premier signal optique S_{Input,1} ou au deuxième signal optique S_{Input,2} en fonction de la température au cours d'une opération de décalage respectivement vers le rouge et vers le bleu. Sur les figures 23 et 24, on a représenté la fonction de transfert du microrésonateur en anneau 10₁ par une ligne continue 80 et la fonction de transfert du microrésonateur en anneau 10₂ par une ligne tiretée 82. A titre d'exemple, chaque module de supervision 38₁ et 38₂ fonctionne selon l'automate fini décrit précédemment en relation avec la figure 15.

Dans le cas d'un décalage vers le rouge, comme cela est représenté en figure 23, on considère qu'initialement le dispositif de commande 75 est au point de fonctionnement P_{A} à la résonance d'ordre k pour le microrésonateur 10₁ et au point de fonctionnement P_{B} à la résonance d'ordre k+1 pour le microrésonateur 10₂. Le point de fonctionnement associé au signal optique S_{Input},₁ évolue du point P_{A} vers le point P_{C} et le point de fonctionnement associé au signal optique S_{Input,2} évolue du point P_{B} vers le point P_{D} comme cela a été décrit précédemment en relation avec la figure 14 pour la transition du point P1 vers le point P6. Le signal S_{Input,1} est alors capté par le microrésonateur 10₂ de sorte que le point de fonctionnement associé au signal optique S_{Input,1} évolue jusqu'au point P_{E} associé à la résonance d'ordre k du microrésonateur 10₂ et le signal S_{Input,2} est alors capté par le microrésonateur 10₁ de sorte que le point de fonctionnement associé au signal optique S_{Input,2} évolue jusqu'au point P_{A} associé à la résonance d'ordre k du microrésonateur 10₁.

Dans le cas d'un décalage vers le bleu, comme cela est représenté en figure 24, on considère qu'initialement le dispositif de commande 75 est au point de fonctionnement P_{A} à la résonance d'ordre k pour le microrésonateur 10₁ et au point de fonctionnement P_{E} à la résonance d'ordre k pour le microrésonateur 10₂. Le point de fonctionnement associé au signal optique S_{Input,1} évolue du point P_{A} vers le point P_{F} et le point de fonctionnement associé au signal optique S_{Input,2} évolue du point P_{E} vers le point P_{G} comme cela a été décrit précédemment en relation avec la figure 14 pour la transition du point P1 vers le point P7. Le signal S_{Input,1} est alors capté par le microrésonateur 10₂ de sorte que le point de fonctionnement associé au signal optique S_{Input,1} évolue jusqu'au point P_{B} associé à la résonance d'ordre k+1 du microrésonateur 10₂ et le signal S_{Input,2} est alors capté par le microrésonateur 10₁ de sorte que le point de fonctionnement associé au signal optique S_{Input,2} évolue jusqu'au point P_{A} associé à la résonance d'ordre k du microrésonateur 10₁.

Dans le cas où plusieurs microrésonateurs sont disposés successivement sur le même guide d'onde, la position du point de fonctionnement de chaque microrésonateur peut être déterminée pour tenir compte de la présence des autres microrésonateurs afin d'assurer que la puissance optique qui parvient à chaque microrésonateur est suffisante.

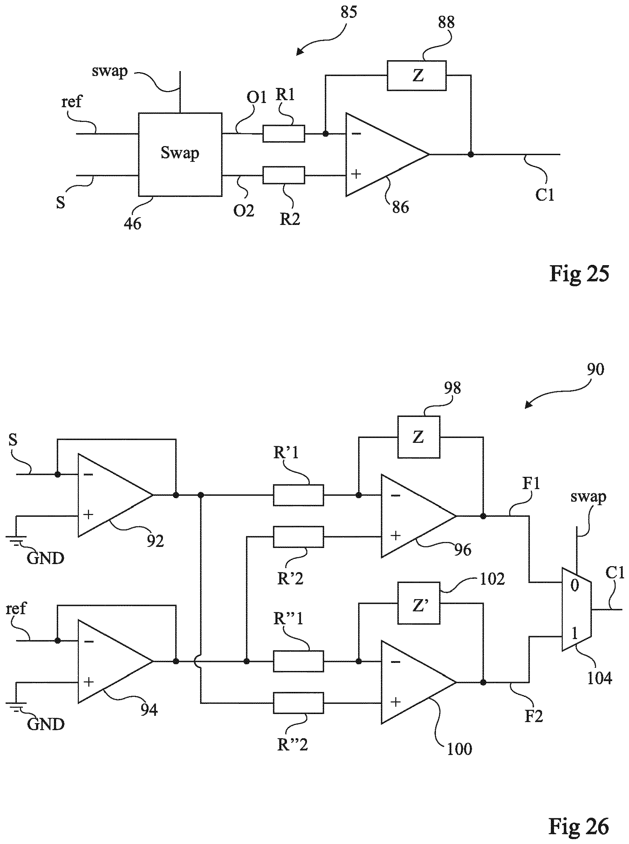

La figure 25 représente un mode de réalisation dans lequel les fonctions réalisées par les modules 28 et 30 décrits précédemment sont réalisées par un module 85 unique. Selon un mode de réalisation, le module 85 comprend le module de permutation 46 décrit précédemment en relation avec la figure 6. Le module 85 comprend, en outre, un amplificateur opérationnel 86 dont l'entrée inverseuse (-) est reliée à la sortie du module de permutation 46 fournissant le signal O1 par l'intermédiaire d'une résistance R1 et dont l'entrée non inverseuse (+) est reliée à la sortie du module de permutation 46 fournissant le signal O2 par l'intermédiaire d'une résistance R2. La sortie de l'amplificateur opérationnel 86 est reliée à l'entrée inverseuse (-) par un bloc 88 réalisant une fonction de transfert Z. La fonction de transfert Z est choisie en fonction du type de régulation souhaitée.

Dans les modes de réalisation décrits précédemment, la boucle de rétroaction mise en oeuvre par le dispositif de commande 20 est rendue divergente en inversant le signal de mesure S et la consigne ref. Selon un autre mode de réalisation, la boucle de rétroaction mise en oeuvre par le dispositif de commande 20 est rendue divergente en modifiant temporairement la fonction de transfert réalisée par la boucle de régulation.

La figure 26 représente un mode de réalisation dans lequel les fonctions réalisées par les modules 28 et 30 décrits précédemment sont réalisées par un module 90 unique. Le module 90 comprend un amplificateur opérationnel 92, monté en suiveur, dont l'entrée inverseuse (-) reçoit le signal S, dont l'entrée non inverseuse (+) est reliée à une source d'un potentiel de référence bas GND, par exemple la masse, et dont la sortie est reliée à l'entrée non inverseuse. Le module 90 comprend un amplificateur opérationnel 94, monté en suiveur, dont l'entrée inverseuse (-) reçoit la consigne ref, dont l'entrée non inverseuse (+) est reliée à la source d'un potentiel de référence bas GND, et dont la sortie est reliée à l'entrée non inverseuse. Le module 90 comprend, en outre, un amplificateur opérationnel 96 dont l'entrée inverseuse (-) est reliée à la sortie de l'amplificateur opérationnel 92 par l'intermédiaire d'une résistance R'1 et dont l'entrée non inverseuse (+) est reliée à la sortie de l'amplificateur opérationnel 94 par l'intermédiaire d'une résistance R'2. L'amplificateur opérationnel 96 fournit le signal F1. La sortie de l'amplificateur opérationnel 96 est reliée à l'entrée inverseuse (-) par un bloc 98 réalisant une fonction de transfert Z. La fonction de transfert Z est choisie en fonction du type de régulation souhaitée. Le module 90 comprend, en outre, un amplificateur opérationnel 100 dont l'entrée inverseuse (-) est reliée à la sortie de l'amplificateur opérationnel 94 par l'intermédiaire d'une résistance R"1, éventuellement égale à R'1, et dont l'entrée non inverseuse (+) est reliée à la sortie de l'amplificateur opérationnel 92 par l'intermédiaire d'une résistance R"2, éventuellement égale à R'2. L'amplificateur opérationnel 100 fournit le signal F2. La sortie de l'amplificateur opérationnel 100 est reliée à l'entrée inverseuse (-) par un bloc 102 réalisant une fonction de transfert Z', éventuellement égale à Z. Le module 90 comprend, en outre, un multiplexeur 104 commandé par le signal swap et recevant le signal F1 à une première entrée et le signal F2 à une deuxième entrée et fournissant le signal C1. Selon un mode de réalisation, le module 90 met en oeuvre la première fonction de transfert définie par l'amplificateur opérationnel 96, le bloc 98 et les résistances R'1 et R'2 lorsque le signal swap est à un premier état, par exemple un état bas noté "0" et met en oeuvre la deuxième fonction de transfert définie par l'amplificateur opérationnel 100, le bloc 102 et les résistances R"1 et R"2 lorsque le signal swap est à un deuxième état, par exemple un état bas noté "1". Les points d'équilibre stables de la boucle de rétroaction lorsqu'elle met en oeuvre la première fonction de transfert ne correspondent plus à des points d'équilibre stables de la boucle de rétroaction lorsqu'elle met en oeuvre la deuxième fonction de transfert et peuvent correspondre à des points d'équilibre instables de la boucle de rétroaction lorsqu'elle met en oeuvre la deuxième fonction de transfert.

Dans le mode de réalisation précédent, la régulation mise en oeuvre par le dispositif de commande 20 peut correspondre à une première fonction de transfert ou à une deuxième fonction de transfert. Selon un mode de réalisation, la régulation mise en oeuvre par le dispositif de commande 20 peut correspondre à des fonctions de transfert différentes selon l'état dans lequel se trouve l'automate fini modélisant le fonctionnement du dispositif 20.

## Revendications

1. Procédé de commande d'au moins un premier élément de chauffage (22 ; 22ᵢ) d'un premier microrésonateur (10 ; 70) à résonances multiples d'un dispositif optoélectronique, le premier microrésonateur recevant K signaux optiques monochromatiques d'entrée, K étant un nombre entier supérieur ou égal à 1, le premier microrésonateur comprenant au moins une première sortie (Drop) adaptée à fournir un premier signal optique de sortie (S_{Drop}), le premier microrésonateur ayant une première fonction de transfert correspondant au rapport entre la puissance du premier signal optique de sortie et la puissance des signaux optiques d'entrée monochromatiques en fonction de la température et ayant plusieurs premiers pics de résonance, dans lequel chaque premier pic de résonance comprend un front montant et un front descendant en fonction de la température, dans lequel un premier capteur est adapté à fournir un premier signal de mesure représentatif d'au moins une partie de la puissance du premier signal optique de sortie, et dans lequel un premier signal d'erreur égal à la différence entre une première consigne et le premier signal de mesure est déterminé, dans lequel, dans un premier mode, le premier élément de chauffage est commandé par une première boucle de rétroaction (20 ; 20ᵢ) pour amener le premier microrésonateur à fonctionner à un premier point de fonctionnement sur un premier pic de résonance initial parmi les premiers pics de résonance, ledit premier point de fonctionnement étant un point d'équilibre stable de la première boucle de rétroaction dans le premier mode, un premier signal de commande (C3 ; C3ᵢ) pour commander le premier élément de chauffage étant déterminé dans le premier mode par la première boucle de rétroaction en utilisant une première régulation basée sur le premier signal d'erreur et dans lequel, pendant un deuxième mode, la première boucle de rétroaction est rendue divergente de sorte que le premier point de fonctionnement n'est plus un point d'équilibre stable pour la première boucle de rétroaction, pour amener le premier microrésonateur à fonctionner à un deuxième point de fonctionnement, ledit deuxième point de fonctionnement étant un point d'équilibre stable de la première boucle de rétroaction dans le deuxième mode et pas un point d'équilibre stable de la première boucle de rétroaction dans le premier mode, de sorte que, pendant le premier mode suivant, le premier microrésonateur est amené à un troisième point de fonctionnement sur un premier pic de résonance final parmi les premiers pics de résonance, dans lequel le premier pic de résonance final est différent du premier pic de résonance initial, ledit troisième point de fonctionnement étant un point d'équilibre stable de la première boucle de rétroaction dans le premier mode, le premier signal de commande pour commander le premier élément de chauffage étant déterminé pendant le deuxième mode par la première boucle de rétroaction en utilisant une deuxième régulation basée sur le premier signal d'erreur, la deuxième régulation étant obtenue en modifiant la première régulation.

2. Procédé de commande selon la revendication 1, dans lequel le dispositif optoélectronique (70) comprend, en outre, un deuxième microrésonateur (10ᵢ) à résonances multiples, et un deuxième élément (22ᵢ) de chauffage du deuxième microrésonateur, le deuxième microrésonateur comprenant au moins une deuxième sortie adaptée à fournir un deuxième signal optique de sortie, le deuxième microrésonateur ayant une deuxième fonction de transfert correspondant au rapport entre la puissance du deuxième signal optique de sortie et la puissance des signaux optiques d'entrée monochromatiques en fonction de la température et ayant plusieurs deuxièmes pics de résonance, dans lequel chaque deuxième pic de résonance comprend un front montant et un front descendant en fonction de la température, le dispositif optoélectronique comprenant un deuxième capteur adapté à fournir un deuxième signal de mesure représentatif d'au moins une partie de la puissance du deuxième signal optique de sortie, et dans lequel un deuxième signal d'erreur égal à la différence entre une deuxième consigne et le deuxième signal de mesure est déterminé, et comprenant une deuxième boucle de rétroaction adaptée à commander, dans un troisième mode, le deuxième élément de chauffage pour amener le deuxième microrésonateur à fonctionner à un quatrième point de fonctionnement sur un deuxième pic de résonance initial parmi les deuxièmes pics de résonance, ledit quatrième point de fonctionnement étant un point d'équilibre stable de la deuxième boucle de rétroaction dans le troisième mode, la deuxième boucle de rétroaction étant adaptée à déterminer un deuxième signal de commande pour commander le deuxième élément de chauffage dans le troisième mode en utilisant une troisième régulation basée sur le deuxième signal d'erreur et dans lequel, pendant un quatrième mode, la deuxième boucle de rétroaction est rendue divergente de sorte que le quatrième point de fonctionnement n'est plus un point d'équilibre stable pour la deuxième boucle de rétroaction, pour amener le deuxième microrésonateur à fonctionner à un cinquième point de fonctionnement, ledit cinquième point de fonctionnement étant un point d'équilibre stable de la deuxième boucle de rétroaction dans le quatrième mode et pas un point d'équilibre stable de la deuxième boucle de rétroaction dans le troisième mode, de sorte que, pendant le troisième mode suivant, le deuxième microrésonateur est amené à un sixième point de fonctionnement sur un deuxième pic de résonance final parmi les deuxièmes pics de résonance, dans lequel le deuxième pic de résonance final est différent du deuxième pic de résonance initial, ledit sixième point de fonctionnement étant un point d'équilibre stable de la deuxième boucle de rétroaction dans le troisième mode.

3. Procédé de commande selon la revendication 1, dans lequel, pendant le deuxième mode, la deuxième régulation est obtenue en inversant le signe du premier signal d'erreur (E ; Eᵢ) par rapport à la première régulation.

4. Procédé de commande selon la revendication 1, dans lequel le passage du premier mode au deuxième mode est réalisé quand le premier signal de commande (C3 ; C3ᵢ) est inférieur à un premier seuil (udh ; udhᵢ) ou supérieur à un deuxième seuil (ovh ; ovhᵢ).

5. Procédé de commande selon l'une quelconque des revendications 1 à 4, dans lequel la première consigne est fixée à un premier niveau dans le premier mode et dans lequel, au moins pendant une partie du deuxième mode, la première consigne (ref, refᵢ) est mise à un deuxième niveau (low, hi) différent du premier niveau (med).

6. Procédé de commande selon la revendication 2, dans lequel, lorsque le passage du premier mode au deuxième mode est détecté pour le premier microrésonateur (10ᵢ), la deuxième boucle de rétroaction (20ᵢ) est amenée à fonctionner dans le quatrième mode.

7. Procédé de commande selon la revendication 2, dans lequel la quatrième régulation est obtenue en inversant le signe du deuxième signal d'erreur par rapport à la troisième régulation.

8. Procédé de commande selon la revendication 2, dans lequel dans lequel la deuxième consigne est fixée à un troisième niveau dans le troisième mode et dans lequel, pendant le quatrième mode, la deuxième consigne est mise à un quatrième niveau différent du troisième niveau.

9. Procédé de commande selon la revendication 1, dans lequel tous les points d'équilibre stables de la première boucle de rétroaction dans le premier mode sont sur les fronts montants des premiers pics de résonance ou tous les points d'équilibre stables de la première boucle de rétroaction dans le premier mode sont sur les fronts descendants des premiers pics de résonance.

10. Procédé de commande selon la revendication 9, dans lequel tous les points d'équilibre stables de la première boucle de rétroaction dans le deuxième mode sont sur les fronts descendants des premiers pics de résonance lorsque tous les points d'équilibre stables de la première boucle de rétroaction dans le premier mode sont sur les fronts montants des premiers pics de résonance ou tous les points d'équilibre stables de la première boucle de rétroaction dans le deuxième mode sont sur les fronts montants des premiers pics de résonance lorsque tous les points d'équilibre stables de la première boucle de rétroaction dans le premier mode sont sur les fronts descendants des premiers pics de résonance.

11. Procédé de commande selon la revendication 2, dans lequel chaque deuxième pic de résonance comprend un front montant et un front descendant, dans lequel tous les points d'équilibre stables de la deuxième boucle de rétroaction dans le troisième mode sont sur les fronts montants des deuxièmes pics de résonance ou tous les points d'équilibre stables de la deuxième boucle de rétroaction dans le troisième mode sont sur les fronts descendants des deuxièmes pics de résonance.

12. Procédé de commande selon la revendication 11, dans lequel tous les points d'équilibre stables de la deuxième boucle de rétroaction dans le quatrième mode sont sur les fronts descendants des deuxièmes pics de résonance lorsque tous les points d'équilibre stables de la deuxième boucle de rétroaction dans le troisième mode sont sur les fronts montants des deuxièmes pics de résonance ou tous les points d'équilibre stables de la deuxième boucle de rétroaction dans le quatrième mode sont sur les fronts montants des deuxièmes pics de résonance lorsque tous les points d'équilibre stables de la deuxième boucle de rétroaction dans le troisième mode sont sur les fronts descendants des deuxièmes pics de résonance.

13. Procédé de commande selon la revendication 1, dans lequel l'un des K signaux optiques monochromatiques d'entrée est à une première longueur d'onde, dans lequel ledit premier point de fonctionnement du premier pic de résonance initial est à la première longueur d'onde et dans lequel ledit troisième point de fonctionnement du premier pic de résonance final est à la première longueur d'onde.

14. Procédé de commande selon la revendication 2, dans lequel l'un des K signaux optiques monochromatiques d'entrée est à une première longueur d'onde, dans lequel ledit premier point de fonctionnement du premier pic de résonance initial est à la première longueur d'onde et dans lequel ledit sixième point de fonctionnement du deuxième pic de résonance final est à la première longueur d'onde.

15. Procédé de commande selon la revendication 1, dans lequel le premier microrésonateur a un intervalle spectral libre et dans lequel, entre le premier point de fonctionnement et le troisième point de fonctionnement, la première fonction de transfert est décalée en longueur d'onde du rapport entre l'intervalle spectral libre et K.

16. Procédé de commande selon la revendication 15, dans lequel l'intervalle entre les longueurs d'onde de deux signaux optiques monochromatiques d'entrée parmi les K signaux optiques monochromatiques d'entrée est sensiblement égal au rapport entre l'intervalle spectral libre et K.

17. Procédé de commande selon la revendication 1, dans lequel, quand le premier élément de chauffage est commandé pour réguler à un niveau haut de chauffage le premier microrésonateur dans le premier mode, le premier élément de chauffage est commandé pour réguler à un niveau bas de chauffage le premier microrésonateur lors du passage dans le deuxième mode, et, quand le premier élément de chauffage est commandé pour réguler au niveau bas de chauffage le premier microrésonateur dans le premier mode, le premier élément de chauffage est commandé pour réguler au niveau haut de chauffage le premier microrésonateur lors du passage dans le deuxième mode.

18. Dispositif optoélectronique (19 ; 74) comprenant un premier microrésonateur (10 ; 70) à résonances multiples, au moins un premier élément de chauffage (22 ; 22ᵢ) du premier microrésonateur et un dispositif de commande (20 ; 75) du premier élément de chauffage, le premier microrésonateur recevant K signaux optiques monochromatiques d'entrée, K étant un nombre entier supérieur ou égal à 1 comprenant au moins une première sortie (Drop) adaptée à fournir un premier signal optique de sortie (S_{Drop}), le premier microrésonateur ayant une première fonction de transfert correspondant au rapport entre la puissance du premier signal optique de sortie et la puissance des signaux optiques d'entrée monochromatiques en fonction de la température et ayant plusieurs premiers pics de résonance, dans lequel chaque premier pic de résonance comprend un front montant et un front descendant en fonction de la température, dans lequel le dispositif optoélectronique comprend un premier capteur adapté à fournir un premier signal de mesure représentatif d'au moins une partie de la puissance du premier signal optique de sortie, et dans lequel le dispositif de commande est adapté à déterminer un premier signal d'erreur égal à la différence entre une première consigne et le premier signal de mesure,
et comprenant une première boucle de rétroaction (20 ; 20ᵢ) adaptée, dans un premier mode, à commander le premier élément de chauffage pour amener le premier microrésonateur à fonctionner à un premier point de fonctionnement sur un premier pic de résonance initial, parmi les premiers pics de résonance, ledit premier point de fonctionnement étant un point d'équilibre stable de la première boucle de rétroaction dans le premier mode, la première boucle de rétroaction étant adaptée à déterminer un premier signal de commande (C3 ; C3ᵢ) pour commander le premier élément de chauffage dans le premier mode en utilisant une première régulation basée sur le premier signal d'erreur, le dispositif de commande étant adapté, pendant un deuxième mode, à rendre divergente la première boucle de rétroaction de sorte que le premier point de fonctionnement n'est plus un point d'équilibre stable pour la première boucle de rétroaction, pour amener le premier microrésonateur à fonctionner à un deuxième point de fonctionnement, ledit deuxième point de fonctionnement étant un point d'équilibre stable de la première boucle de rétroaction dans le deuxième mode et pas un point d'équilibre stable de la première boucle de rétroaction dans le premier mode, de sorte que, pendant le premier mode suivant, le premier microrésonateur est amené à un troisième point de fonctionnement sur un premier pic de résonance final parmi les premiers pics de résonance, dans lequel le premier pic de résonance final est différent du premier pic de résonance initial, ledit troisième point de fonctionnement étant un point d'équilibre stable de la première boucle de rétroaction dans le premier mode, la première boucle de rétroaction étant adaptée à déterminer le premier signal de commande pour commander le premier élément de chauffage pendant le deuxième mode en utilisant une deuxième régulation basée sur le premier signal d'erreur, la deuxième régulation étant obtenue en modifiant la première régulation.

19. Dispositif optoélectronique selon la revendication 18, comprenant, en outre, un deuxième microrésonateur (10ᵢ) à résonances multiples, le dispositif optoélectronique comprenant un deuxième élément (22ᵢ) de chauffage du deuxième microrésonateur, et dans lequel, dans le deuxième mode, le dispositif de commande (20 ; 75) est adapté à commander le deuxième élément de chauffage pour amener le deuxième microrésonateur à fonctionner au premier pic de résonance.

20. Dispositif optoélectronique selon la revendication 18, dans lequel le dispositif de commande est adapté, pendant le deuxième mode, à inverser le signe du premier signal d'erreur (E ; Eᵢ).

21. Dispositif optoélectronique selon la revendication 20, dans lequel le dispositif de commande (20 ; 75) est adapté à commander le passage du premier mode au deuxième mode quand le premier signal de commande (C3 ; C3ᵢ) est inférieur à un premier seuil (udh ; udhᵢ) ou supérieur à un deuxième seuil (ovh ; ovhᵢ).

22. Dispositif optoélectronique selon l'une quelconque des revendications 18 à 21, dans lequel le dispositif de commande (20 ; 75) est adapté à fixer la première consigne à un premier niveau dans le premier mode et, pendant le deuxième mode, à mettre la première consigne (ref , refᵢ) à un deuxième niveau (low, hi) différent du premier niveau (med).

23. Dispositif optoélectronique selon la revendication 18 ou 22, dans lequel le dispositif de commande (20 ; 75) est adapté à amener la deuxième boucle de rétroaction (20ᵢ) à fonctionner dans le quatrième mode lorsque le passage du premier mode au deuxième mode est détecté pour le premier microrésonateur (10ᵢ).

## Patentansprüche

1. Verfahren zum Steuern wenigstens eines ersten Heizelements (22; 22ᵢ) zum Erwärmen eines ersten multiresonanten Mikroresonators (10; 70) einer optoelektronischen Vorrichtung, wobei der erste Mikroresonator K monochromatische optische Eingangssignale empfängt, wobei K eine ganze Zahl größer oder gleich 1 ist, wobei der erste Mikroresonator wenigstens einen ersten Ausgang (Drop) aufweist, der geeignet ist, ein erstes optisches Ausgangssignal (S_{Drop}) zu liefern, wobei der erste Mikroresonator eine erste Transferfunktion aufweist, die dem Verhältnis der Leistung des ersten optischen Ausgangssignals zur Leistung der monochromatischen optischen Eingangssignale gemäß der Temperatur entspricht und mehrere erste Resonanzspitzen bzw. -peaks aufweist, wobei jede erste Resonanzspitze eine steigende Seite und eine fallende Seite gemäß der Temperatur aufweist, wobei ein erster Sensor geeignet ist, ein erstes Messsignal zu liefern, das für wenigstens einen Teil einer Leistung des ersten optischen Ausgangssignals repräsentativ ist, und wobei ein erstes Fehlersignal gleich einer Differenz zwischen einem ersten Referenzsignal und dem ersten Messsignal bestimmt wird, wobei in einem ersten Modus das erste Heizelement durch eine erste Rückkopplungsschleife (20, 20ᵢ) gesteuert wird, um den ersten Mikroresonator dazu zu veranlassen, an einem ersten Betriebspunkt bei einer anfänglichen ersten Resonanzspitze unter den ersten Resonanzspitzen zu arbeiten, wobei der erste Betriebspunkt ein stabiler Gleichgewichtspunkt der ersten Rückkopplungsschleife im ersten Modus ist, ein erstes Steuersignal (C3; C3ᵢ) zum Steuern des ersten Heizelements, das im ersten Modus durch die erste Rückkopplungsschleife unter Verwendung eines ersten Regelbetriebs basierend auf dem ersten Fehlersignal bestimmt wird, und wobei während eines zweiten Modus die erste Rückkopplungsschleife divergierend gestaltet wird, so dass der erste Betriebspunkt nicht mehr ein stabiler Gleichgewichtspunkt der ersten Rückkopplungsschleife ist, um den ersten Mikroresonator dazu zu veranlassen, bei einem zweiten Betriebspunkt zu arbeiten, wobei der zweite Betriebspunkt ein stabiler Gleichgewichtspunkt der ersten Rückkopplungsschleife in dem zweiten Modus und nicht mehr ein stabiler Gleichgewichtspunkt der ersten Rückkopplungsschleife in dem ersten Modus ist, so dass, während eines nachfolgenden ersten Modus, der erste Mikroresonator dazu veranlasst wird, bei einem dritten Betriebspunkt bei einer endgültigen ersten Resonanzspitze unter den ersten Resonanzspitzen zu arbeiten, wobei die erste endgültige Resonanzspitze sich von der anfänglichen ersten Resonanzspitze unterscheidet, wobei der dritte Betriebspunkt ein stabiler Gleichgewichtspunkt der ersten Rückkopplungsschleife in dem ersten Modus ist, wobei das erste Steuersignal zum Steuern des ersten Heizelements während des zweiten Modus durch die erste Rückkopplungsschleife unter Verwendung eines zweiten Regelbetriebs basierend auf dem ersten Fehlersignal bestimmt wird, wobei der zweite Regelbetrieb durch Modifizierung des ersten Regelbetriebs erhalten wird.

2. Steuerverfahren nach Anspruch 1, wobei die optische Vorrichtung (70) ferner einen zweiten multiresonanten Mikroresonator (10ᵢ) und ein zweites Heizelement (22ᵢ) zum Erwärmen des zweiten Mikroresonators aufweist, wobei der zweite Mikroresonator wenigstens einen zweiten Ausgang aufweist, der geeignet ist, ein zweites optisches Ausgangssignal zu liefern, wobei der zweite Mikroresonator eine zweite Transferfunktion aufweist, die dem Verhältnis der Leistung des zweiten optischen Signals zur Leistung der monochromatischen optischen Eingangssignale gemäß der Temperatur entspricht und mehrere zweite Resonanzspitzen aufweist, wobei jede zweite Resonanzspitze eine steigende Seite und eine fallende Seite gemäß der Temperatur aufweist, wobei die optoelektronische Vorrichtung einen zweiten Sensor aufweist, der geeignet ist, ein zweites Messsignal zu liefern, das für wenigstens einen Teil einer Leistung des zweiten optischen Ausgangssignals repräsentativ ist, und wobei ein zweites Fehlersignal gleich einer Differenz zwischen einem zweiten Referenzsignal und dem zweiten Messsignal bestimmt wird, und eine zweite Rückkopplungsschleife aufweist, die geeignet ist, um in einem dritten Modus das zweite Heizelement zu steuern, um den zweiten Mikroresonator dazu zu veranlassen, bei einem vierten Betriebspunkt an einer anfänglichen zweiten Resonanzspitze unter den zweiten Resonanzspitzen zu arbeiten, wobei der vierte Betriebspunkt ein stabiler Gleichgewichtspunkt der zweiten Rückkopplungsschleife im dritten Modus ist, wobei die zweite Rückkopplungsschleife geeignet ist, um ein zweites Steuersignal zum Steuern des zweiten Heizelements im dritten Modus unter Verwendung eines dritten Regelbetriebs basierend auf dem zweiten Fehlersignal zu bestimmen, und wobei während eines vierten Modus die zweite Rückkopplungsschleife divergierend gestaltet wird, so dass der vierte Betriebspunkt nicht mehr ein stabiler Gleichgewichtspunkt der zweiten Rückkopplungsschleife ist, um den zweiten Mikroresonator zum Betrieb an einem fünften Betriebspunkt zu veranlassen, wobei der fünfte Betriebspunkt ein stabiler Gleichgewichtspunkt der zweiten Rückkopplungsschleife im vierten Modus und nicht mehr ein stabiler Gleichgewichtspunkt der zweiten Rückkopplungsschleife im dritten Modus ist, so dass der zweite Mikroresonator während eines nachfolgenden dritten Modus zu einem sechsten Betriebspunkt an einer letzten zweiten Resonanzspitze unter den zweiten Resonanzspitzen veranlasst wird, wobei die letzte zweite Resonanzspitze von der anfänglichen zweiten Resonanzspitze verschieden ist, wobei der sechste Betriebspunkt ein stabiler Gleichgewichtspunkt der zweiten Rückkopplungsschleife im dritten Modus ist.

3. Steuerverfahren nach Anspruch 1, wobei während des zweiten Modus die zweite Regelung erhalten wird, indem das Vorzeichen des ersten Fehlersignals (E; Eᵢ) bezüglich der ersten Regelung umgekehrt wird.

4. Steuerverfahren nach Anspruch 1, wobei das Umschalten vom ersten Modus zum zweiten Modus durchgeführt wird, wenn das erste Steuersignal (C3; C3ᵢ) niedriger als ein erster Schwellenwert (udh; udhᵢ) oder höher als ein zweiter Schwellenwert (ovh; ovhᵢ) ist.

5. Steuerverfahren nach einem der Ansprüche 1 bis 4, wobei das erste Referenzsignal im ersten Modus auf einen ersten Pegel eingestellt wird und wobei, wenigstens während eines Teils des zweiten Modus, das erste Referenzsignal (ref, refᵢ) auf einen zweiten Pegel (low, hi) eingestellt wird, der sich vom ersten Pegel (med) unterscheidet.

6. Steuerverfahren nach Anspruch 2, wobei, wenn das Umschalten vom ersten Modus in den zweiten Modus für den ersten Mikroresonator (10ᵢ) detektiert wird, die zweite Rückkopplungsschleife (20ᵢ) zum Betrieb im vierten Modus veranlasst wird.

7. Steuerverfahren nach Anspruch 2, wobei die vierte Regelung erhalten wird, indem das Vorzeichen des zweiten Fehlersignals bezüglich der dritten Regelung umgekehrt wird.

8. Steuerverfahren nach Anspruch 2, wobei das zweite Referenzsignal im dritten Modus auf einen dritten Pegel eingestellt wird und wobei während des vierten Modus das zweite Referenzsignal auf einen vierten Pegel eingestellt wird, der sich vom dritten Pegel unterscheidet.

9. Steuerverfahren nach Anspruch 1, wobei alle stabilen Gleichgewichtspunkte der ersten Rückkopplungsschleife im ersten Modus auf den steigenden Seiten der ersten Resonanzspitzen liegen oder alle stabilen Gleichgewichtspunkte der ersten Rückkopplungsschleife im ersten Modus auf den fallenden Seiten der ersten Resonanzspitzen liegen.

10. Steuerverfahren nach Anspruch 9, wobei alle stabilen Gleichgewichtspunkte der ersten Rückkopplungsschleife im zweiten Modus an den fallenden Seiten der ersten Resonanzspitzen liegen, wenn alle stabilen Gleichgewichtspunkte der ersten Rückkopplungsschleife im ersten Modus an den steigenden Seiten der ersten Resonanzspitzen liegen oder alle stabilen Gleichgewichtspunkte der ersten Rückkopplungsschleife im zweiten Modus an den steigenden Seiten der ersten Resonanzspitzen liegen, wenn alle stabilen Gleichgewichtspunkte der ersten Rückkopplungsschleife im ersten Modus an den fallenden Seiten der ersten Resonanzspitzen liegen.

11. Steuerverfahren nach Anspruch 2, wobei jede zweite Resonanzspitze eine steigende Seite und eine fallende Seite aufweist, und wobei alle stabilen Gleichgewichtspunkte der zweiten Rückkopplungsschleife im dritten Modus an den steigenden Seiten der zweiten Resonanzspitzen liegen oder alle stabilen Gleichgewichtspunkte der zweiten Rückkopplungsschleife im dritten Modus an den fallenden Seiten der zweiten Resonanzspitzen liegen.

12. Steuerverfahren nach Anspruch 11, wobei alle stabilen Gleichgewichtspunkte der zweiten Rückkopplungsschleife im vierten Modus an den fallenden Seiten der zweiten Resonanzspitzen liegen, wenn alle stabilen Gleichgewichtspunkte der zweiten Rückkopplungsschleife im dritten Modus an den steigenden Seiten der zweiten Resonanzspitzen liegen oder alle stabilen Gleichgewichtspunkte der zweiten Rückkopplungsschleife im vierten Modus an den steigenden Seiten der zweiten Resonanzspitzen liegen, wenn alle stabilen Gleichgewichtspunkte der zweiten Rückkopplungsschleife im dritten Modus an den fallenden Seiten der zweiten Resonanzspitzen liegen.

13. Steuerverfahren nach Anspruch 1, wobei eines der K monochromatischen optischen Eingangssignale eine erste Wellenlänge hat, wobei der erste Betriebspunkt der ersten anfänglichen Resonanzspitze bei der ersten Wellenlänge liegt und der dritte Betriebspunkt der ersten endgültigen Resonanzspitze bei der ersten Wellenlänge liegt.

14. Steuerverfahren nach Anspruch 2, wobei eines der K monochromatischen optischen Eingangssignale eine erste Wellenlänge hat, wobei der erste Betriebspunkt der ersten anfänglichen Resonanzspitze bei der ersten Wellenlänge und der sechste Betriebspunkt der zweiten endgültigen Resonanzspitze bei der ersten Wellenlänge liegen.

15. Steuerverfahren nach Anspruch 1, wobei der erste Mikroresonator ein freies Spektralintervall aufweist, und wobei zwischen dem ersten Betriebspunkt und dem dritten Betriebspunkt die erste Transferfunktion in der Wellenlänge um das Verhältnis des freien Spektralintervalls und K verschoben wird.

16. Steuerverfahren nach Anspruch 15, wobei der Abstand zwischen den Wellenlängen zweier monochromatischer optischer Eingangssignale unter den K monochromatischen optischen Eingangssignalen im Wesentlichen gleich dem Verhältnis des freien Spektralintervalls und K ist.

17. Steuerverfahren nach Anspruch 1, wobei, wenn das erste Heizelement gesteuert wird, um den ersten Mikroresonator im ersten Modus auf ein hohes Heizniveau zu regeln, das erste Heizelement gesteuert wird, um den ersten Mikroresonator beim Umschalten zu dem zweiten Modus auf ein niedriges Heizniveau zu regeln, und, wenn das erste Heizelement gesteuert wird, um den ersten Mikroresonator im ersten Modus auf ein niedriges Heizniveau zu regeln, das erste Heizelement gesteuert wird, um den ersten Mikroresonator beim Umschalten zu dem zweiten Modus auf das hohe Heizniveau zu regeln.

18. Optoelektronische Vorrichtung (19; 74) mit einem ersten multiresonanten Mikroresonator (10; 70), wenigstens einem ersten Heizelement (22; 22ᵢ) des ersten Mikroresonators und einer Steuervorrichtung (20; 75) zum Steuern des ersten Heizelements, wobei der erste Mikroresonator K monochromatische optische Eingangssignale empfängt, wobei K eine ganze Zahl größer oder gleich 1 ist und wenigstens einen ersten Ausgang (Drop) aufweist, der geeignet ist, ein erstes optisches Ausgangssignal (S_{Drop}) zu liefern, wobei der erste Mikroresonator eine erste Transferfunktion aufweist, die dem Verhältnis der Leistung des ersten optischen Ausgangssignals zur Leistung der monochromatischen optischen Eingangssignale gemäß der Temperatur entspricht und mehrere erste Resonanzspitzen aufweist, wobei jede erste Resonanzspitze eine steigende Seite und eine fallende Seite gemäß der Temperatur aufweist, wobei die optoelektronische Vorrichtung einen ersten Sensor aufweist, der geeignet ist, ein erstes Messsignal zu liefern, das für wenigstens einen Teil einer Leistung des ersten optischen Ausgangssignals repräsentativ ist, und wobei die Steuervorrichtung geeignet ist, um ein erstes Fehlersignal zu bestimmen, das gleich einer Differenz zwischen einem ersten Referenzsignal und dem ersten Messsignal ist,
und eine erste Rückkopplungsschleife (20; 20ᵢ) aufweist, die geeignet ist, in einem ersten Modus das erste Heizelement zu steuern, um den ersten Mikroresonator dazu zu veranlassen, an einem ersten Betriebspunkt bei einer anfänglichen ersten Resonanzspitze unter den ersten Resonanzspitzen zu arbeiten, wobei der erste Betriebspunkt ein stabiler Gleichgewichtspunkt der ersten Rückkopplungsschleife im ersten Modus ist, wobei die erste Rückkopplungsschleife geeignet ist, ein erstes Steuersignal (C3; C3ᵢ) zum Steuern des ersten Heizelements, das im ersten Modus durch die erste Rückkopplungsschleife unter Verwendung eines ersten Regelbetriebs basierend auf dem ersten Fehlersignal bestimmt wird, zu bestimmen, wobei die Steuervorrichtung geeignet ist, während eines zweiten Modus die erste Rückkopplungsschleife divergierend zu machen, so dass der erste Betriebspunkt nicht mehr ein stabiler Gleichgewichtspunkt der ersten Rückkopplungsschleife ist, um den ersten Mikroresonator dazu zu veranlassen, bei einem zweiten Betriebspunkt zu arbeiten, wobei der zweite Betriebspunkt ein stabiler Gleichgewichtspunkt der ersten Rückkopplungsschleife in dem zweiten Modus und nicht mehr ein stabiler Gleichgewichtspunkt der ersten Rücckopplungsschleife in dem ersten Modus ist, so dass, während eines nachfolgenden ersten Modus der erste Mikroresonator dazu veranlasst wird, bei einem dritten Betriebspunkt an einer endgültigen ersten Resonanzspitze unter den ersten Resonanzspitzen zu arbeiten, wobei die erste endgültige Resonanzspitze unterschiedlich zu der anfänglichen ersten Resonanzspitze ist, wobei der dritte Betriebspunkt ein stabiler Gleichgewichtspunkt der ersten Rückkopplungsschleife in dem ersten Modus ist, wobei die erste Rückkopplungsschleife geeignet ist, das erste Steuersignal zum Steuern des ersten Heizelements während des zweiten Modus unter Verwendung eines zweiten Regelbetriebs basierend auf dem ersten Fehlersignal zu bestimmen, wobei der zweite Regelbetrieb durch Modifizierung des ersten Regelbetriebs erhalten wird.

19. Optoelektronische Vorrichtung nach Anspruch 18, die ferner einen zweiten multiresonanten Mikroresonator (10ᵢ) aufweist, wobei die optoelektronische Vorrichtung ein zweites Heizelement (22ᵢ) zum Erwärmen des zweiten Mikroresonators aufweist, und wobei die Steuervorrichtung (20; 75) im zweiten Modus geeignet ist, das zweite Heizelement zu steuern, um den zweiten Mikroresonator zum Betrieb bei einer ersten Resonanzspitze zu veranlassen.

20. Optoelektronische Vorrichtung nach Anspruch 18, wobei die Steuervorrichtung geeignet ist, während des zweiten Modus das Vorzeichen des ersten Fehlersignals (E; Eᵢ) umzukehren.

21. Optoelektronische Vorrichtung nach Anspruch 20, wobei die Steuervorrichtung (20; 75) geeignet ist, das Umschalten vom ersten Modus in den zweiten Modus zu steuern, wenn das erste Steuersignal (C3; C3ᵢ) niedriger als ein erster Schwellenwert (udh; udhᵢ) oder höher als ein zweiter Schwellenwert (ovh; ovhᵢ) ist.

22. Optoelektronische Vorrichtung nach einem der Ansprüche 18 bis 21, wobei die Steuervorrichtung (20; 75) geeignet ist, das erste Referenzsignal im ersten Modus auf einen ersten Pegel einzustellen und wobei während des zweiten Modus das erste Referenzsignal (ref, refᵢ) auf einen zweiten Pegel (low, hi) eingestellt wird, der sich vom ersten Pegel (med) unterscheidet.

23. Optoelektronische Vorrichtung nach einem der Ansprüche 18 bis 22, wobei die Steuervorrichtung (20; 75) geeignet ist, die zweite Rückkopplungsschleife (20ᵢ) zum Betrieb in dem vierten Modus zu veranlassen, wenn das Umschalten von dem ersten Modus in den zweiten Modus für den ersten Mikroresonator (10ᵢ) detektiert wird.

## Claims

1. A method of controlling at least a first heating element (22; 22ᵢ) to heat a first multi-resonant microresonator (10; 70) of an optoelectronic device, the first microresonator receiving K monochromatic input optical signals, K being an integer superior or equal to 1, the first microresonator comprising at least one first output (Drop) capable of supplying a first output optical signal (S_{Drop}), the first microresonator having a first transfer function corresponding to the ratio of the power of the first output optical signal to the power of the monochromatic input optical signals according to temperature and having several first resonance peaks, wherein each first resonance peak comprises a rising side and a falling side according to the temperature, wherein a first sensor is capable of supplying a first measurement signal representative of at least part of a power of the first output optical signal, and wherein a first error signal equal to a difference between a first reference signal and the first measurement signal is determined, wherein, in a first mode, the first heating element is controlled by a first feedback loop (20; 20ᵢ) to lead the first microresonator to operate at a first operating point on an initial first resonance peak among said first resonance peaks, said first operating point being a stable point of equilibrium of the first feedback loop in the first mode, a first control signal (C3; C3ᵢ) for controlling the first heating element being determined in the first mode by the first feedback loop using a first regulation operation based on the first error signal and wherein, during a second mode, the first feedback loop is made diverging so that the first operating point no longer is a stable point of equilibrium of the first feedback loop, to lead the first microresonator to operate at a second operating point, said second operating point being a stable point of equilibrium of the first feedback loop in the second mode and no longer a stable point of equilibrium of the first feedback loop in the first mode, so that, during a subsequent first mode, the first microresonator is led to operate to a third operation point on a final first resonance peak among said first resonance peaks wherein the first final resonance peak is different than the initial first resonance peak, said third operating point being a stable point of equilibrium of the first feedback loop in the first mode, the first control signal for controlling the first heating element being determined during the second mode by the first feedback loop using a second regulation operation based on the first error signal, the second regulation operation being obtained by modifying the first regulation operation.

2. The control method of claim 1, wherein the optical device (70) further comprises a second multi-resonant microresonator (10ᵢ), and a second heating element (22ᵢ) to heat the second microresonator, the second microresonator comprising at least one second output capable of supplying a second output optical signal, the second microresonator having a second transfer function corresponding to the ratio of the power of the second optical signal to the power of the monochromatic input optical signals according to the temperature and having several second resonance peaks, wherein each second resonance peak comprises a rising side and a falling side according to the temperature, the optoelectronic device comprising a second sensor capable of supplying a second measurement signal representative of at least part of a power of the second output optical signal, and wherein a second error signal equal to a difference between a second reference signal and the second measurement signal is determined, and comprising a second feedback loop adapted to command, in a third mode, the second heating element to lead the second microresonator to operate at a fourth operating point on an initial second resonance peak among said second resonance peaks, said fourth operating point being a stable point of equilibrium of the second feedback loop in the third mode, the second feedback loop being adapted to determine a second control signal for controlling the second heating element in the third mode by using a third regulation operation based on the second error signal and wherein, during a fourth mode, the second feedback loop is made diverging so that the fourth operating point no longer is a stable point of equilibrium of the second feedback loop, to lead the second microresonator to operate at a fifth operating point, said fifth operating point being a stable point of equilibrium of the second feedback loop in the fourth mode and no longer a stable point of equilibrium of the second feedback loop in the third mode, so that, during a subsequent third mode, the second microresonator is led to operate to a sixth operation point on a final second resonance peak among said second resonance peaks, wherein the final second resonance peak is different than the initial second resonance peak, said sixth operating point being a stable point of equilibrium of the second feedback loop in the third mode.

3. The control method of claim 1, wherein, during the second mode, the second regulation is obtained by inverting the sign of the first error signal (E; Eᵢ) with respect to the first regulation.

4. The control method of claim 1, wherein the switching from the first mode to the second mode is performed when the first control signal (C3; C3ᵢ) is lower than a first threshold (udh; udhᵢ) or higher than a second threshold (ovh; ovhᵢ).

5. The control method of any of claims 1 to 4, wherein the first reference signal is set to a first level in the first mode and wherein, at least during part of the second mode, the first reference signal (ref, refᵢ) is set to a second level (low, hi) different from the first level (med).

6. The control method of claim 2, wherein, when the switching from the first mode to the second mode is detected for the first microresonator (10ᵢ), the second feedback loop (20ᵢ) is led to operate in the fourth mode.

7. The control method of claim 2, wherein the fourth regulation is obtained by inverting the sign of the second error signal with respect to the third regulation.

8. The control method of claim 2, wherein the second reference signal is set to a third level in the third mode and wherein, during the fourth mode, the second reference signal is set to a fourth level different from the third level.

9. The control method of claim 1, wherein all the stable equilibrium points of the first feedback loop in the first mode are on the rising sides of the first resonance peaks or all the stable equilibrium points of the first feedback loop in the first mode are on the falling sides of the first resonance peaks.

10. The control method of claim 9, wherein all the stable equilibrium points of the first feedback loop in the second mode are on the falling sides of the first resonance peaks when all the stable equilibrium points of the first feedback loop in the first mode are on the rising sides of the first resonance peaks or all the stable equilibrium points of the first feedback loop in the second mode are on the rising sides of the first resonance peaks when all the stable equilibrium points of the first feedback loop in the first mode are on the falling sides of the first resonance peaks.

11. The control method of claim 2, wherein each second resonance peak comprises a rising side and a falling side, and wherein all the stable equilibrium points of the second feedback loop in the third mode are on the rising sides of the second resonance peaks or all the stable equilibrium points of the second feedback loop in the third mode are on the falling sides of the second resonance peaks.

12. The control method of claim 11, wherein all the stable equilibrium points of the second feedback loop in the fourth mode are on the falling sides of the second resonance peaks when all the stable equilibrium points of the second feedback loop in the third mode are on the rising sides of the second resonance peaks or all the stable equilibrium points of the second feedback loop in the fourth mode are on the rising sides of the second resonance peaks when all the stable equilibrium points of the second feedback loop in the third mode are on the falling sides of the second resonance peaks.

13. The control method of claim 1, wherein one of the K monochromatic input optical signals is at a first wavelength, wherein said first operating point of the first initial resonance peak is at the first wavelength and said third operating point of the first final resonance peak is at the first wavelength.

14. The control method of claim 2, wherein one of the K monochromatic input optical signals is at a first wavelength, wherein said first operating point of the first initial resonance peak is at the first wavelength and said sixth operating point of the second final resonance peak is at the first wavelength.

15. The control method of claim 1, wherein the first microresonator has a free spectral interval, and wherein, between the first operating point and the third operating point, the first transfer function is shifted in wavelength by the ratio of the free spectral interval and K.

16. The control method of claim 15, wherein the interval between the wavelengths of two monochromatic input optical signals among the K monochromatic input optical signals is substantially equal to the ratio of the free spectral interval and K.

17. The control method of claim 1, wherein, when the first heating element is controlled to regulate at a high heating level the first microresonator in the first mode, the first heating element is controlled to regulate at a low heating level the first microresonator when switching to the second mode, and, when the first heating element is controlled to regulate at a low heating level the first microresonator in the first mode, the first heating element is controlled to regulate at the high heating level the first microresonator when switching to the second mode.

18. An optoelectronic device (19; 74) comprising a first multi-resonant microresonator (10; 70), at least a first heating element (22; 22ᵢ) of the first microresonator and a control device (20; 75) for controlling the first heating element, the first microresonator receiving K monochromatic input optical signals, K being an integer superior or equal to 1, comprising at least one first output (Drop) capable of supplying a first output optical signal (S_{Drop}), the first microresonator having a first transfer function corresponding to the ratio of the power of the first output optical signal to the power of the monochromatic input optical signals according to temperature and having several first resonance peaks, wherein each first resonance peak comprises a rising side and a falling side according to the temperature, wherein the optoelectronic device comprising a first sensor capable of supplying a first measurement signal representative of at least part of a power of the first output optical signal, and wherein the control device is adapted to determine a first error signal equal to a difference between a first reference signal and the first measurement signal,
and comprising a first feedback loop (20; 20ᵢ) capable of, in a first mode, controlling the first heating element to lead the first microresonator to operate at a first operating point on an initial first resonance peak among said first resonance peaks, said first operating point being a stable point of equilibrium of the first feedback loop in the first mode, the first feedback loop being capable of determining a first control signal (C3; C3ᵢ) for controlling the first heating element being determined in the first mode by the first feedback loop using a first regulation operation based on the first error signal, the control device being capable of, during a second mode, making diverging the first feedback loop so that the first operating point no longer is a stable point of equilibrium of the first feedback loop, to lead the first microresonator to operate at a second operating point, said second operating point being a stable point of equilibrium of the first feedback loop in the second mode and no longer a stable point of equilibrium of the first feedback loop in the first mode, so that, during a subsequent first mode, the first microresonator is led to operate to a third operation point on a final first resonance peak among said first resonance peaks wherein the first final resonance peak is different than the initial first resonance peak, said third operating point being a stable point of equilibrium of the first feedback loop in the first mode, the first feedback loop being capable of determining the first control signal for controlling the first heating element during the second mode using a second regulation operation based on the first error signal, the second regulation operation being obtained by modifying the first regulation operation.

19. The optoelectronic device of claim 18, further comprising a second multi-resonant microresonator (10ᵢ), the optoelectronic device comprising a second heating element (22ᵢ) to heat the second microresonator, and wherein, in the second mode, the control device (20; 75) is capable of controlling the second heating element to lead the second microresonator to operate at first resonance peak.

20. The optoelectronic device of claim 18, wherein the control device is capable of, during the second mode, inverting the sign of the first error signal (E; Eᵢ).

21. The optoelectronic device of claim 20, wherein the control device (20; 75) is capable of controlling the switching from the first mode to the second mode when the first control signal (C3; C3ᵢ) is lower than a first threshold (udh; udhᵢ) or higher than a second threshold (ovh; ovhᵢ).

22. The optoelectronic device of any of claims 18 to 21, wherein the control device (20; 75) is capable of setting the first reference signal to a first level in the first mode and wherein, during the second mode, setting the first reference signal (ref, refᵢ) to a second level (low, hi) different from the first level (med).

23. The optoelectronic device of any of claims 18 to 22, wherein the control device (20; 75) is capable of leading the second feedback loop (20ᵢ) to operate in the fourth mode when the switching from the first mode to the second mode is detected for the first microresonator (10ᵢ).
